(19) Europäisches Patentamt
European Patent Office
Office européen des brevets

(11) **EP 3 111 167 B1**

(12) **FASCICULE DE BREVET EUROPEEN**

(45) Date de publication et mention de la délivrance du brevet:
**06.03.2019 Bulletin 2019/10**

(21) Numéro de dépôt: **15713202.8**

(22) Date de dépôt: **26.02.2015**

(51) Int Cl.:
***G01C 19/72*** *(2006.01)*　　　***G01B 9/02*** *(2006.01)*

(86) Numéro de dépôt international:
**PCT/FR2015/050464**

(87) Numéro de publication internationale:
**WO 2015/128588 (03.09.2015 Gazette 2015/35)**

(54) **DISPOSITIF DE MESURE INTERFÉROMÉTRIQUE**

INTERFEROMETRISCHE MESSVORRICHTUNG

INTERFEROMETRIC MEASUREMENT DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.02.2014　FR 1451543**

(43) Date de publication de la demande:
**04.01.2017　Bulletin 2017/01**

(73) Titulaire: **IXBLUE**
**78100 Saint-Germain-en-Laye (FR)**

(72) Inventeurs:
- **LEFEVRE, Hervé**
  **F-75007 Paris (FR)**
- **GUATTARI, Frédéric**
  **F-93300 Aubervilliers (FR)**
- **MOLUCON, Cédric**
  **F-78100 Saint Germain en Laye (FR)**
- **CHOUVIN, Stéphane**
  **F-92220 Bagneux (FR)**

(74) Mandataire: **Jacobacci Coralis Harle**
**32, rue de l'Arcade**
**75008 Paris (FR)**

(56) Documents cités:
**EP-A1- 2 251 641**　　　**US-A- 5 331 404**
**US-A1- 2003 081 219**

- **BURNS W K ET AL: "Excess noise in fiber gyroscope sources", IEEE PHOTONICS TECHNOLOGY LETTERS, IEEE SERVICE CENTER, PISCATAWAY, NJ, US, vol. 2, no. 8, 1 août 1990 (1990-08-01), pages 606-608, XP011407052, ISSN: 1041-1135, DOI: 10.1109/68.58063**

**Description**

**DOMAINE TECHNIQUE DE L'INVENTION**

La présente invention concerne la métrologie optique par méthode interférométrique.

Elle concerne plus particulièrement un dispositif de mesure interférométrique permettant de réduire le bruit d'intensité en excès de la source lumineuse utilisée dans ce dispositif de mesure interférométrique.

L'invention trouve une application particulièrement avantageuse dans la réalisation d'un gyromètre comprenant un tel dispositif de mesure interférométrique et dans la réalisation d'une centrale d'attitude ou de navigation inertielle utilisant un tel gyromètre.

**ARRIERE-PLAN TECHNOLOGIQUE**

On connaît des documents EP 2 251 641 A1 et US-5,331,404 un dispositif de mesure interférométrique comportant :

- une source lumineuse d'émission spontanée à spectre large émettant un signal lumineux source,
- des moyens de détection délivrant un signal électrique représentatif du résultat d'une mesure dudit paramètre à mesurer,
- des moyens de traitement et de commande électrique traitant ledit signal électrique pour fournir ladite mesure dudit paramètre à mesurer, et
- des moyens de couplage optique :

  - recevant ledit signal lumineux source,
  - dirigeant une partie au moins dudit signal lumineux source vers une voie de mesure comprenant un interféromètre de mesure qui comporte un modulateur de phase et un anneau de Sagnac, de fréquence propre $f_p$, sensible audit paramètre à mesurer, ledit interféromètre recevant, en entrée, un signal lumineux d'entrée de puissance lumineuse d'entrée $P_{IN}$ et produisant, en sortie, un signal lumineux de sortie de puissance lumineuse de sortie $P_{OUT}$ dépendant dudit paramètre physique à mesurer et proportionnelle à ladite puissance lumineuse d'entrée $P_{IN}$, ledit signal lumineux de sortie étant polarisé selon une première direction de polarisation et modulé à une fréquence de modulation $f_m$ grâce audit modulateur de phase,
  - prélevant une autre partie dudit signal lumineux source vers une voie de compensation de bruit distincte de ladite voie de mesure, ladite voie de compensation de bruit produisant un signal lumineux de compensation présentant une puissance lumineuse retour $P_{RET}$,
  - dirigeant ledit signal lumineux de sortie et ledit signal lumineux de compensation vers lesdits moyens de détection.

Dans la description qui va suivre, une source lumineuse est dite à « émission spontanée » lorsque le spectre de cette source comprend un continuum de longueurs d'onde.

Comme exemples d'une telle source, on peut citer : le soleil, une source thermique rayonnante, une diode super-luminescente à semi-conducteur, dite aussi super-radiante, ou une source super-fluorescente à fibre amplificatrice.

Ces sources super-luminescentes, super-radiantes ou super-fluorescentes sont en fait des sources d'émission spontanée dont cette émission spontanée est amplifiée par une émission stimulée qui conserve les caractéristiques spectrales de l'émission spontanée d'origine. Le terme général pour ce type de sources est source ASE (pour « *Amplified by stimulated emission Spontaneous Emission* » en anglais).

À la différence d'une source ASE, une source laser n'est pas une source lumineuse d'émission spontanée, son spectre d'émission ne comprend pas un continuum de longueurs d'onde.

On considérera par ailleurs qu'une source lumineuse est à spectre large lorsque le rapport entre la pleine largeur à mi-hauteur ou FWHM (pour « *Full Width at Half Maximum* » en anglais) de son spectre continu et sa longueur d'onde moyenne est supérieur à $10^{-7}$.

Par exemple, une source lumineuse à fibre dopée erbium (symbole chimique Er) filtrée au moyen d'un filtre de Bragg présente typiquement un spectre pseudo-gaussien centrée autour d'une longueur d'onde de 1530 nm à 1560 nm et ayant une pleine largeur à mi-hauteur (FWHM) d'environ 5 à 20 nanomètres (nm) ; cette source lumineuse est donc une source large, le rapport entre sa pleine largeur à mi-hauteur et sa longueur d'onde moyenne étant égale à environ 3 à 12 x $10^{-3}$.

Une source lumineuse d'émission spontanée à spectre large émet un signal lumineux dont la puissance lumineuse est sujette à différentes sources de bruit.

Est connu tout d'abord le bruit photonique $B_{ph}$ qui est un « bruit de grenaille » (« *shot noise* » en anglais) et qui est la limite théorique de toute source lumineuse. Le bruit photonique est un bruit blanc dont la valeur est directement reliée à la puissance lumineuse de la source lumineuse.

Plus précisément, le bruit photonique varie, en absolu, comme la racine carrée de la puissance lumineuse et donc, en relatif, comme l'inverse de la racine carrée de la puissance lumineuse.

Par exemple, un signal lumineux à 1550 nm de 30 microwatt ($\mu$W) de puissance présente un bruit photonique relatif $B_{ph}$ de $10^{-7}$/Hz$^{1/2}$ en écart type, c'est-à-dire de $10^{-14}$/Hz en puissance de bruit, soit encore -140 décibels/Hz (-140 dB/Hz).

Pour un signal lumineux de puissance 300 $\mu$W, donc dix fois supérieure, le bruit photonique relatif $B_{ph}$ est de -150 dB/Hz, soit 10 dB/Hz en dessous en puissance de bruit, soit un facteur 10 en puissance de bruit et un facteur racine carrée de 10 ($10^{1/2} \approx 3,16$) en écart-type.

Est également connu le bruit relatif d'intensité en excès (« *excess Relative Intensity Noise* » en anglais, ou « *excess RIN* » ou simplement « *RIN* »), qui est aussi un bruit blanc mais pour des fréquences inférieures au dixième de la pleine largeur à mi-hauteur du spectre en fréquence optique, FWHM(f), soit 0,1 à 0,3 térahertz (THz) pour une FWHM (en longueur d'onde) de 7 à 20 nm autour d'une longueur d'onde de 1550 nm.

Le bruit relatif d'intensité en excès $B_{RIN}$ est, en puissance de bruit, approximativement égal à l'inverse de la pleine largeur à mi-hauteur du spectre en fréquence optique FWHM(f) du signal lumineux à spectre large, c'est-à-dire $B_{RIN}$ = 1/FWHM(f).

En effet, il est connu que le bruit d'intensité en excès provient des battements de puissance entre l'ensemble des différentes composantes fréquentielles du spectre large continu du signal lumineux qui interfèrent entre elles, ces composantes ayant entre elles des fréquences différentes et une phase aléatoire.

Le spectre du bruit relatif d'intensité en excès est donc le résultat d'une loi d'autocorrélation : il commence à la fréquence nulle et présente une largeur sensiblement égale à la largeur du spectre optique de la source lumineuse qui, lui, est en revanche centré autour d'une fréquence très haute, environ 200 THz pour une longueur d'onde de 1550 nm.

Ainsi, le même signal lumineux de 30 $\mu$W de puissance qui présenterait une pleine largeur à mi-hauteur en fréquence optique FWHM(f) de 1THz, donc de $10^{12}$Hz, aurait, à basse fréquence, un bruit relatif d'intensité en excès $B_{RIN}$ de $10^{-12}$/Hz soit -120 dB/Hz, en puissance de bruit, et donc 20 dB/Hz au-dessus de la puissance de bruit photonique relatif $B_{ph}$ de -140 dB/Hz.

Un tel signal à émission spontanée à spectre large présente un bruit relatif d'intensité en excès qui est la source prépondérante de bruit et qu'il convient de compenser voire d'éliminer.

Le dispositif de mesure interférométrique du document US-5,331,404 utilise pour cela des moyens de détection qui comprennent deux détecteurs de rayonnement optiques distincts mesurant, l'un le signal lumineux de sortie produit par l'interféromètre de mesure qui est entaché par le bruit RIN de la source lumineuse, et l'autre le signal lumineux de compensation de bruit entaché du même bruit RIN.

Il est alors prévu que les moyens de traitement et de commande électrique traitent les signaux électriques délivrés par chacun des détecteurs, afin de soustraire le bruit RIN du signal électrique de mesure avec le bruit RIN du signal de compensation, de sorte que la mesure du paramètre est plus précise.

Cependant, le dispositif de mesure interférométrique du document US-5,331,404 s'avère difficile à mettre en oeuvre à cause de la chaîne additionnelle de traitement électronique nécessaire pour la soustraction du bruit RIN.

## OBJET DE L'INVENTION

Afin de remédier à l'inconvénient précité de l'état de la technique, la présente invention propose un dispositif de mesure interférométrique permettant de compenser, voire d'éliminer, optiquement et simplement, le bruit d'intensité en excès entachant le signal lumineux de sortie produit par l'interféromètre.

À cet effet, l'invention concerne un dispositif de mesure interférométrique tel que décrit en introduction.

Selon l'invention, ledit dispositif de mesure interférométrique est tel que :

- ladite voie de compensation de bruit RIN comprend :

  - des moyens de rotation de polarisation adaptés pour produire ledit signal lumineux de compensation selon une deuxième direction de polarisation croisée avec ladite première direction de polarisation, et
  - des moyens de bouclage optique de ladite voie de compensation sur ladite voie de mesure, lesdits moyens de bouclage recevant ledit signal lumineux de compensation circulant sur ladite voie de compensation et redirigeant une partie au moins dudit signal lumineux de compensation vers ladite voie de mesure,

- lesdits moyens de détection comprennent un unique détecteur de rayonnement optique connecté auxdits moyens de couplage optique, lesdits moyens de couplage optique recevant ledit signal lumineux de sortie de puissance $P_{OUT}$ et ledit signal lumineux de compensation de puissance $P_{RET}$, qui circulent sur ladite voie de mesure, pour les acheminer vers ledit détecteur,
- il est prévu en outre des moyens d'équilibrage de puissance adaptés à corriger ladite puissance lumineuse retour $P_{RET}$ ou bien ladite puissance de sortie $P_{OUT}$ acheminées vers ledit détecteur de telle sorte que ladite puissance lumineuse retour $P_{RET}$ soit sensiblement égale à ladite puissance lumineuse de sortie $P_{OUT}$ au niveau dudit détecteur, et
- ladite voie de compensation présente une longueur telle que ledit signal lumineux de sortie présente au niveau du détecteur un retard temporel $\tau$ par rapport audit signal lumineux de compensation sensiblement égal à $1/(2*f_p)$.

Le dispositif selon l'invention permet de réduire, voire de supprimer, l'effet du bruit d'intensité en excès de la source lumineuse sur la mesure du paramètre à mesurer grâce à l'interféromètre de mesure, et cela en utilisant un unique détecteur de rayonnement optique.

De plus, la réalisation d'un tel dispositif de mesure interférométrique, en particulier de ses moyens de traitement et de commande électrique, est plus aisée car elle n'utilise qu'un seul détecteur de rayonnement lumineux et qu'une seule chaîne de traitement électronique.

Grâce à la configuration de la voie de compensation avec ses moyens de rotation de la polarisation et ses moyens de bouclage optique, il est possible de réinjecter, sur la voie de mesure, le signal lumineux de compensation de bruit RIN qui porte le même bruit d'intensité en excès que le signal lumineux de sortie, ces deux signaux lumineux étant alors acheminés jusqu'au détecteur unique des moyens de détection grâce notamment aux moyens de couplage optique.

Comme le signal lumineux de sortie et le signal lumineux de compensation sont polarisés selon deux directions de polarisation orthogonales entre elles, ces deux signaux ne peuvent interférer entre eux, si bien que le signal électrique délivré par le détecteur de rayonnement optique est directement proportionnel à la somme de la puissance lumineuse de sortie $P_{OUT}$ et de la puissance lumineuse de retour $P_{RET}$.

La longueur de la voie de compensation étant ajustée pour que le signal lumineux de sortie présente au niveau du détecteur un retard temporel $\tau$ par rapport au signal lumineux de compensation sensiblement égal à $1/(2*f_p)$, et la puissance lumineuse retour $P_{RET}$ étant sensiblement égale à ladite puissance lumineuse de sortie $P_{OUT}$ au niveau dudit détecteur grâce aux moyens d'équilibrage de puissance, le bruit d'intensité en excès aux fréquences caractéristiques égales à un multiple impair de la fréquence propre $f_p$ (soit $f_p$, $3*f_p$, $5*f_p$, etc...) de l'interféromètre de mesure est réduit, voire éliminé si $\tau = 1/(2*f_p)$ et si $P_{OUT} = P_{RET}$ sur le détecteur.

Comme cela est expliqué dans l'ouvrage « The Fiber-Optic Gyroscope » (H. Lefèvre, Artech House, 1993), le signal lumineux de sortie, qui porte l'information sur le paramètre à mesurer, est avantageusement modulé à une fréquence de modulation $f_m$ qui est justement un multiple impair de la fréquence propre $f_p$ de l'interféromètre en anneau de Sagnac (i.e. $f_m = (2k+1)*f_p$, k étant un entier naturel).

Ainsi, grâce au dispositif de mesure interférométrique selon l'invention, on peut avantageusement s'affranchir de l'effet du bruit d'intensité en excès provenant de la source lumineuse pour effectuer une mesure précise du paramètre à mesurer.

En d'autres termes, on réalise grâce au dispositif de mesure interférométrique selon l'invention une ligne à retard en intensité lumineuse (c'est-à-dire en puissance) permettant de soustraire optiquement, pour toutes les fréquences multiples impaires de la fréquence propre $f_p$ de l'interféromètre de mesure, du signal de mesure, un signal de référence présentant à ces fréquences le même bruit d'intensité en excès. Les puissances des signaux de mesure et de référence sont sommées sur le détecteur, mais aux multiples impairs de la fréquence propre, cette sommation équivaut à une soustraction, car les bruits à ces fréquences sont en opposition de phase.

Avantageusement, le retard temporel $\tau$ entre le signal lumineux de sortie et le signal lumineux de compensation est compris entre $0,9/(2*f_p)$ et $1,1/(2*f_p)$, de préférence entre $0,99/(2*f_p)$ et $1,01/(2*f_p)$.

De préférence, ce retard temporel $\tau$ est supérieur à $1/(2*f_p)$.

Avantageusement, le rapport $P_{RET}/P_{OUT}$ entre la puissance lumineuse retour $P_{RET}$ et la puissance lumineuse de sortie $P_{OUT}$ est compris entre 0,8 et 1,2, de préférence entre 0,95 et 1,05.

Par ailleurs, d'autres caractéristiques avantageuses et non limitatives du dispositif de mesure interférométrique selon l'invention sont les suivantes :

- ledit dispositif de mesure interférométrique comporte en outre un polariseur linéaire placé en aval de ladite source lumineuse pour polariser ledit signal lumineux source selon ladite première direction de polarisation ;
- lequel lesdits moyens de couplage optique comprennent un premier coupleur deux par deux à quatre ports ;
- lesdits moyens de couplage optique comprennent un circulateur optique placé en amont dudit premier coupleur, ledit circulateur optique présentant trois ports connectés respectivement à ladite source lumineuse, à l'un des ports dudit premier coupleur, et audit détecteur ;
- lesdits moyens de bouclage optique comprennent un deuxième coupleur deux par deux à quatre ports, lesdits moyens d'équilibrage de puissance comprenant également ledit deuxième coupleur ;

- lesdits moyens de bouclage optique comprennent un séparateur de polarisation ;
- lesdits moyens d'équilibrage de puissance comprennent un atténuateur optique pour un signal lumineux polarisé selon ladite deuxième direction de polarisation de manière à corriger ladite puissance lumineuse retour $P_{RET}$.

Dans le cas général où la source lumineuse émet un signal lumineux source non polarisée, le dispositif de mesure interférométrique est conçu pour une telle source lumineuse, et, d'une part, ladite voie de compensation comprend un isolateur optique destiné à bloquer un signal lumineux polarisé selon la deuxième direction de polarisation se propageant sur ladite voie de compensation en sens inverse dudit signal lumineux de compensation, et, d'autre part, lesdits moyens de bouclage optique comprennent un séparateur de polarisation.

Dans ce cas, d'autres caractéristiques avantageuses et non limitatives du dispositif de mesure interférométrique selon l'invention sont les suivantes :

- lesdits moyens de couplage optique comprennent un premier coupleur deux par deux à quatre ports ;
- lesdits moyens de couplage optique comprennent un circulateur optique placé en amont dudit premier coupleur, ledit circulateur optique présentant trois ports connectés respectivement à ladite source lumineuse, à l'un des ports dudit premier coupleur, et audit détecteur, et lesdits moyens d'équilibrage de puissance comprennent ledit premier coupleur ;
- lesdits moyens de couplage optique comprennent en outre un deuxième coupleur deux par deux à quatre ports, et lesdits moyens d'équilibrage de puissance comprennent ledit deuxième coupleur ;
- lesdits moyens d'équilibrage de puissance comprennent un atténuateur optique pour un signal lumineux polarisé selon ladite deuxième direction de polarisation de manière à corriger ladite puissance lumineuse retour $P_{RET}$ ;
- lesdits moyens d'équilibrage de puissance comprennent ledit modulateur de phase et lesdits moyens de traitement et de commande électrique commandant ledit modulateur de phase pour corriger ladite puissance lumineuse de sortie $P_{OUT}$.

La présente invention trouve une application particulièrement avantageuse dans la réalisation d'un gyromètre à fibre optique comportant un dispositif de mesure interférométrique destiné à mesurer la vitesse de rotation autour d'un axe de rotation perpendiculaire au plan de l'anneau de SAGNAC de l'interféromètre de mesure.

Ainsi, la présente invention concerne également un gyromètre comportant un dispositif de mesure interférométrique conforme à l'invention, le paramètre physique à mesurer étant une composante de la vitesse de rotation dudit gyromètre autour de son axe de rotation, ledit axe de rotation étant confondu avec l'axe de révolution de l'anneau de SAGNAC.

La présente invention concerne par ailleurs une centrale d'attitude ou de navigation inertielle comportant au moins un tel gyromètre.

L'invention peut également trouver une application dans la réalisation d'un capteur de courant électrique ou de champ magnétique comportant un dispositif de mesure interférométrique conforme à l'invention, destiné à mesurer une différence de phase produite dans l'anneau de Sagnac par effet FARADAY.

## DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- les figures 1 à 3 représentent des vues schématiques respectivement d'un premier, deuxième et troisième mode de réalisation d'un dispositif de mesure interférométrique selon l'invention dans lesquels le dispositif comporte un polariseur linéaire placé en aval de la source lumineuse ;
- la figure 4 représente une vue schématique d'une variante du troisième mode de réalisation de la figure 3 dans laquelle la voie de compensation comprend un atténuateur optique ;
- les figures 5 à 7 représentent des vues schématiques de respectivement d'un quatrième, cinquième et sixième mode de réalisation d'un dispositif de mesure interférométrique selon l'invention conçu pour une source lumineuse non polarisée ;
- la figure 8 représente une vue schématique d'un septième mode de réalisation d'un dispositif de mesure interférométrique selon l'invention.

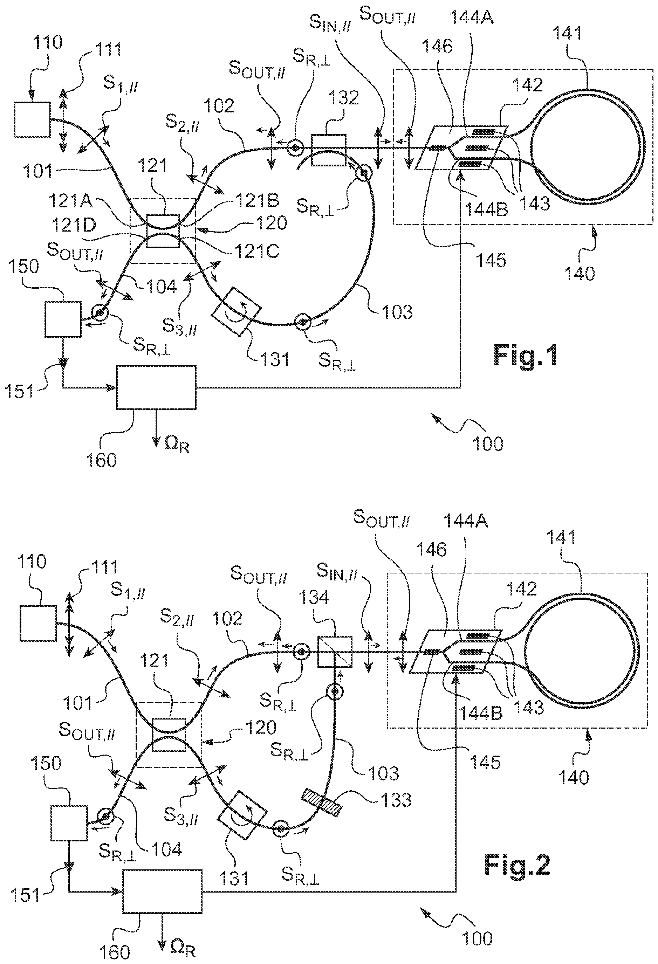

On a représenté sur les figures 1 à 8 des vues schématiques représentant un dispositif 100 ; 200 ; 300 ; 400 de mesure interférométrique selon plusieurs modes de réalisation de l'invention et de leurs variantes.

Ce dispositif 100 ; 200 ; 300 ; 400 est ici un dispositif à fibre optique qui comprend différentes voies 101, 102, 103, 104 de circulation pour la propagation de signaux lumineux dans ce dispositif 100 ; 200 ; 300 ; 400, toutes ces voies 101, 102, 103, 104 étant formées de sections de fibre optique, par exemple des fibres optiques en silice classiquement utilisées en télécommunications optiques.

Dans ces différents modes de réalisation, le dispositif 100 ; 200 ; 300 ; 400 comporte une source lumineuse 110, un interféromètre de mesure 140 et un seul détecteur de rayonnement optique 150.

La source lumineuse 110 est ici une source lumineuse d'émission spontanée à spectre large. Il s'agit par exemple d'une source lumineuse ASE à fibre optique dopée avec une terre rare, par exemple de l'erbium telle que celles utilisées classiquement dans le domaine des télécommunications optiques.

Cette source lumineuse 110 peut être filtrée au moyen d'un filtre de Bragg (non représenté) si bien qu'elle présente un spectre optique de forme sensiblement gaussienne, qui est centré autour d'une longueur d'onde moyenne $\lambda_0$ de 1530 nm, soit 196 THz en fréquence, et qui a une pleine largeur à mi-hauteur FWHM de 6,5 nm, soit 833 GHz, exprimée en fréquence.

Cette source lumineuse 110 est donc une source lumineuse à spectre large puisque le rapport entre sa pleine largeur à mi-hauteur FWHM et sa longueur d'onde moyenne $\lambda_0$ est égal à 4,2 x $10^{-3}$, supérieure à $10^{-7}$.

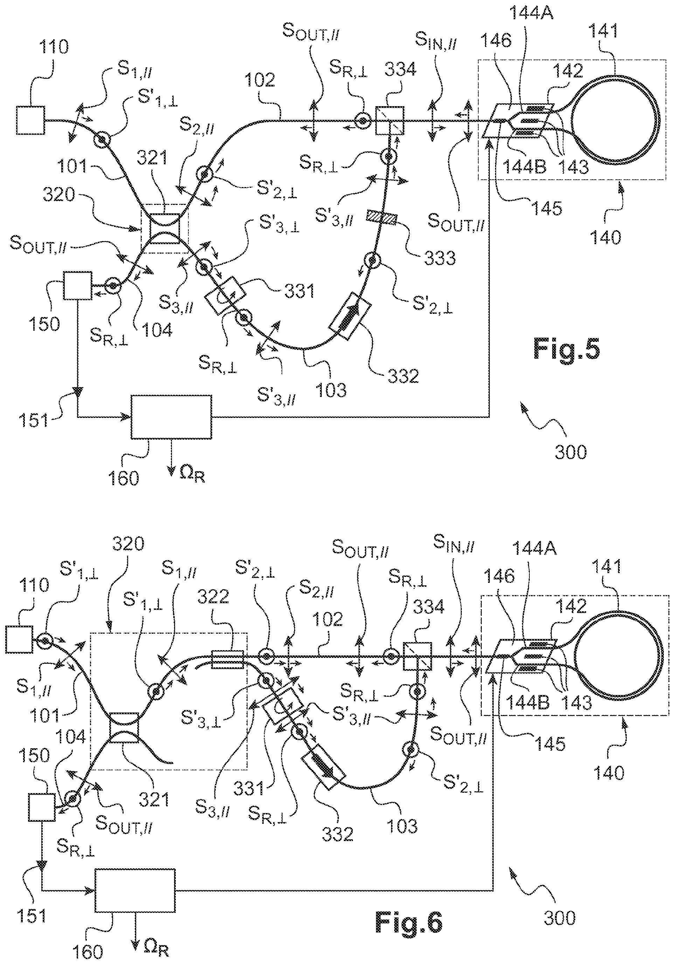

Cette source lumineuse 110 émet un signal lumineux source $S_{1,\parallel}$ ; $S_{1,\parallel}$, $S'_{1,\perp}$ sur une voie source 101 du dispositif 100 ; 200 ; 300 ; 400 de mesure interférométrique. Comme évoqué précédemment, la voie source 101 est formée d'une section de fibre optique, par exemple une section de fibre monomode à maintien de polarisation quand la source est polarisée (cas des figures 1 à 4) ou une section de fibre ordinaire quand la source est non-polarisée (cas des figures 5 à 8).

Ce signal lumineux source $S_{1,\parallel}$ ; $S_{1,\parallel}$, $S'_{1,\perp}$ est entaché d'un bruit relatif d'intensité en excès $B_{RIN}$ dont la densité spectrale de puissance de bruit est égale à 1/FWHM soit 1,2 x $10^{-12}$/Hz, soit -119 dB/Hz.

La densité spectrale de puissance de bruit photonique est constante et indépendante de la fréquence, le bruit photonique étant connu pour être un bruit blanc.

Avec une puissance de sortie de 30 $\mu$W, le bruit photonique relatif $B_{ph}$ serait égal à $10^{-7}$/Hz$^{1/2}$, soit -140 dB/Hz pour la densité spectrale de puissance de bruit photonique relatif.

À l'inverse, comme évoqué précédemment, il est connu que le bruit d'intensité en excès n'est pas rigoureusement un bruit blanc. Néanmoins, pour la source lumineuse 110 qui présente un spectre large optique gaussien de pleine largeur à mi-hauteur FWHM = 6,5 nm autour de la longueur d'onde moyenne $\lambda_0$ = 1530 nm, la densité spectrale de puissance du bruit relatif d'intensité en excès peut être considérée comme constante en dessous d'une fréquence égale au dixième de la pleine largeur à mi-hauteur en fréquence optique FWHM(f) soit 83 GHz.

Ainsi, pour une bande de fréquence comprise entre 0 et 100 MHz, par exemple, la densité de puissance de bruit relatif d'intensité en excès $B_{RIN}$ est très supérieure à la densité de puissance de bruit photonique relatif, l'écart étant aussi élevé que 21 dB/Hz.

L'interféromètre de mesure 140 du dispositif 100 ; 200 ; 300 ; 400 de mesure interférométrique dans les différents modes de réalisation de l'invention comprend ici un anneau 141 de SAGNAC à fibre optique et un modulateur 143 de phase.

L'interféromètre de mesure 140 est destiné à mesurer un paramètre physique, auquel l'anneau 141 de Sagnac est sensible.

Ici, ce paramètre physique à mesurer est la composante $\Omega_R$ de la vitesse de rotation de l'interféromètre de mesure 2, suivant un axe de rotation (non représenté) perpendiculaire au plan de l'anneau de SAGNAC.

Ce dispositif 100 ;200 ; 300 ; 400 de mesure interférométrique peut entrer dans la réalisation d'un gyromètre, ici un gyromètre à fibre optique, pouvant lui-même faire partie d'une centrale d'attitude ou de navigation inertielle.

Le paramètre physique $\Omega_R$ à mesurer correspond alors ici à une composante de la vitesse de rotation du gyromètre autour de son axe de rotation, celui étant par exemple confondu avec l'axe de l'anneau de SAGNAC.

En variante, le dispositif de mesure interférométrique peut faire partie d'un capteur de courant ou de champ magnétique. Dans ce cas, le paramètre physique à mesurer est un courant électrique ou un champ magnétique, qui par effet FARADAY induit une variation de la différence de phase non réciproque entre deux ondes lumineuses contra-propagatives se propageant dans l'anneau de SAGNAC.

De manière connue (voir notamment H. Lefèvre, « The Fiber-Optic Gyroscope », Artech House, 1993), l'anneau 141 de SAGNAC comporte une bobine de fibre optique, de préférence monomode et à conservation de polarisation.

Cette bobine de fibre optique présente ici une longueur de 1 kilomètre de sorte que l'anneau 141 de SAGNAC présente une fréquence propre $f_p$ = 103,45 kHz.

De manière avantageuse, et comme cela est représenté uniquement sur la figure 1, l'interféromètre de mesure 140 comporte un circuit optique 142 multifonctions comprenant un substrat électro-optique 146, une jonction optique intégrée 144 en forme de Y, dite aussi « *jonction Y* », un polariseur intégré 145 disposé sur la base de la jonction Y 144, et deux paires d'électrodes de modulation 143 placée chacune sur une branche 144A, 144B de la jonction Y 144, ces électrodes de modulation 143 formant ledit modulateur de l'interféromètre de mesure 140.

En effet, lorsque des tensions de modulation sont appliquées aux bornes de chacune de ces deux paires d'électrodes de modulation 143, un champ électrique modulé apparaît dans le substrat électro-optique 146 du circuit optique 142 qui va moduler la phase optique des signaux lumineux traversant le circuit optique 142.

L'interféromètre de mesure 140 :

- reçoit en entrée un signal lumineux d'entrée, représenté ici par une double flèche et référencé par le signe de référence $S_{IN,\parallel}$ (voir figures 1 à 8), et
- produit en sortie un signal lumineux de sortie, représenté également par une double flèche et référencé par le signe de référence $S_{OUT,\parallel}$ (voir figures 1 à 8).

Les différents signaux lumineux peuvent circuler sur les différentes voies 101, 102, 103, 104 du dispositif 100 ; 200 ; 300 ; 400 selon des sens de propagation différents. Aussi, par souci de clarté, on a indiqué sur les dessins, pour chaque signal lumineux, le sens de propagation du signal lumineux considéré sur une voie 101, 102, 103, 104 au moyen d'une petite flèche sensiblement parallèle à ladite voie 101, 102, 103, 104.

Ainsi, sur les dessins, le signal lumineux d'entrée $S_{IN,\parallel}$ se propage sur la voie de mesure 102 ici de gauche à droite et le signal lumineux de sortie se propage sur la voie de mesure 102 de droite à gauche.

De préférence, cette voie de mesure 102 est formée d'une section de fibre optique à maintien de polarisation.

Le signal lumineux d'entrée $S_{IN,\parallel}$ présente une puissance lumineuse d'entrée, notée $P_{IN}$, et le signal lumineux de sortie $S_{OUT,\parallel}$ présente une puissance lumineuse de sortie, notée $P_{OUT}$.

De manière classique, la puissance lumineuse de sortie $P_{OUT}$ du signal lumineux de sortie $S_{OUT,\parallel}$ dépend du paramètre $\Omega_R$ physique à mesurer et est proportionnelle à la puissance lumineuse d'entrée $P_{IN}$ du signal lumineux d'entrée $S_{IN,\parallel}$.

Le signal lumineux de sortie $S_{OUT,\parallel}$ est avantageusement modulé à une fréquence de modulation $f_m$ grâce au modulateur 143 de phase de l'interféromètre de mesure 140.

Cette modulation est rendue souhaitable afin d'améliorer le rapport signal à bruit de la mesure effectuée par l'interféromètre de mesure 140.

En pratique, à la modulation du signal lumineux de sortie $S_{OUT,\parallel}$ correspond une modulation de la puissance lumineuse de sortie $P_{OUT}$.

De manière avantageuse, il est connu que la fréquence de modulation $f_m$ peut être un multiple impair de la fréquence propre $f_p$ de l'anneau 141 de SAGNAC de l'interféromètre de mesure 140.

Dans la suite, on considérera que la fréquence de modulation $f_m$ du signal lumineux de sortie $S_{OUT,\parallel}$ est égale à la fréquence propre $f_p$ de l'interféromètre de mesure 140, soit: $f_m = f_p = 103,45$ kHz pour une bobine de fibre optique de 1 km.

Par ailleurs, par passage dans le circuit optique 142, le signal lumineux de sortie $S_{OUT,\parallel}$ produit par l'interféromètre de mesure 140 est polarisé linéairement selon une première direction de polarisation (voir par exemple H. Lefèvre, « The Fiber-Optic Gyroscope », Artech House, 1993 - Annexe 3) grâce au polariseur intégré 145 placée en entrée/sortie du circuit optique 142.

Dans cette description et les figures associées, cette première direction de polarisation (référencée par le signe $\parallel$) est ici orientée dans un plan parallèle au plan de l'anneau 141 de Sagnac.

En pratique, quelle que soit la direction de polarisation du signal lumineux d'entrée $S_{IN,\parallel}$, le signal lumineux de sortie $S_{OUT,\parallel}$ sera toujours polarisé selon cette première direction de polarisation.

On verra dans la suite de la description que cette propriété du modulateur 142 de phase pourra avantageusement être mise à profit pour la réalisation du dispositif 100 ; 200 ; 300 ; 400 de mesure interférométrique selon l'invention.

La source lumineuse 110 d'émission spontanée du dispositif 100, 200, 300, 400 est, de manière générale, une source qui n'est pas *a priori* polarisée, de sorte que le signal lumineux source émis par la source lumineuse 110 est non polarisé.

Il est connu que le signal lumineux source peut alors se décomposer selon deux composantes quelconques présentant des états de polarisation orthogonaux : par exemple deux composantes rectilignes croisées, c'est-à-dire perpendiculaires entre elles ou bien deux composantes circulaires, l'une circulaire droite et l'autre circulaire gauche.

Pour aider à la compréhension, comme le montre les figures 5 à 8 pour les quatrième, cinquième, sixième et septième mode de réalisation dans lesquels la source lumineuse 110 est non polarisée, le signal lumineux source $S_{1,\parallel}$, $S'_{1,\perp}$ se décompose en :

- une composante parallèle $S_{1,\parallel}$ dont la polarisation rectiligne est alignée selon la première direction de polarisation (dite ici direction « *parallèle* »), et
- une composante perpendiculaire $S'_{1,\perp}$ dont la polarisation rectiligne est alignée selon une deuxième direction de polarisation (dite ici direction « *perpendiculaire* ») qui est croisée, c'est-à-dire perpendiculaire à la première direction de polarisation.

Dans la suite de la description, on pourra, pour ces modes de réalisation particuliers, assimiler le signal lumineux source à ses deux composantes $S_{1,\parallel}$, $S'_{1,\perp}$ de polarisation rectiligne. On verra d'ailleurs que, pour ces modes de réalisation particuliers, la composante parallèle $S_{1,\parallel}$ du signal lumineux source est la composante qui est utilisée dans l'interféromètre de mesure 140, alors que la composante perpendiculaire $S'_{1,\perp}$ du signal lumineux source n'est pas exploitée par l'interféromètre de mesure 140.

À l'inverse, dans les premier, deuxième et troisième modes de réalisation représentés sur les figures 1 à 4, le signal lumineux source est polarisé.

Ce signal lumineux source peut être polarisé soit parce que la source lumineuse du dispositif de mesure interférométrique est intrinsèquement une source polarisée, soit par utilisation d'un composant optique permettant de polariser rectilignement le signal lumineux source émis par une source lumineuse non polarisée.

Dans les premier, deuxième et troisième modes de réalisation représentés sur les figures 1 à 4, on se trouve ici dans le deuxième cas, et, le dispositif 100 ; 200 de mesure interférométrique comporte un polariseur linéaire 111 qui est placé en aval de la source lumineuse 110 pour polariser le signal lumineux source selon la première direction de polarisation.

En pratique, l'axe du polariseur linéaire 111 peut être alignée avec cette première direction de polarisation lors d'une opération de calibration de la source lumineuse 110.

Ainsi, en sortie du polariseur linéaire 111, le signal lumineux source ne présente qu'une seule composante rectiligne, à savoir la composante parallèle $S_{1,\parallel}$, à laquelle on pourra assimiler le signal lumineux source.

Pour coupler la source lumineuse 110 avec l'interféromètre de mesure 140, le dispositif 100 ; 200 ; 300 ; 400 comporte également des moyens de couplage optique 120 ; 220 ; 320 ; 420 (voir figures 1 à 8).

Ces moyens de couplage optique 120 ; 220 ; 320 ; 420, dont les différentes configurations seront décrites en détail dans la suite de la description, sont connectés à la source lumineuse 110 via la voie source 101 de manière à recevoir le signal lumineux source $S_{1,\parallel}$ ; $S_{i,\parallel}$, $S'_{1,\perp}$ émis par la source lumineuse 110.

Les moyens de couplage optique 120 ; 220 ; 320 ; 420 sont également connectés à l'interféromètre de mesure 140 via la voie de mesure 102 de manière à diriger une partie au moins du signal lumineux source $S_{1,\parallel}$ ; $S_{1,\parallel}$, $S'_{1,\perp}$ reçu via la voie source 101 vers la voie de mesure 102.

Dans le cas où le signal lumineux source $S_{1,\parallel}$ émis par la source lumineuse 110 est polarisé selon la première direction de polarisation grâce au polariseur linéaire 111 (cas des $1^{er}$, $2^{ème}$ et $3^{ème}$ modes de réalisation, cf. figures 1 à 4), la partie du signal lumineux source $S_{1,\parallel}$ redirigée vers la voie de mesure 102 par les moyens de couplage optique 120 ; 220 comprend une seule composante $S_{2,\parallel}$ rectiligne de même direction de polarisation que le signal lumineux source $S_{1,\parallel}$.

Dans le cas où le signal lumineux source $S_{i,\parallel}$, $S'_{1,\perp}$ émis par la source lumineuse 110 est non polarisé (cas des $4^{ème}$, $5^{ème}$, $6^{ème}$ et $7^{ème}$ modes de réalisation, cf. figures 5 à 8), la partie du signal lumineux source $S_{1,\parallel}$, $S'_{1,\perp}$ redirigée vers la voie de mesure 102 par les moyens de couplage optique 320 ; 420 comprend deux composantes $S_{2,\parallel}$, $S'_{2,\perp}$ rectilignes dont les directions de polarisation sont respectivement alignées avec les directions de polarisation des composantes rectilignes $S_{1,\parallel}$, $S'_{1,\perp}$ du signal lumineux source, c'est-à-dire selon la première direction de polarisation et la deuxième direction de polarisation.

Comme représenté sur les figures 1 à 7, les moyens de couplage optique 120 ; 220 ; 320 ; 420 sont par ailleurs connectés à une troisième voie dudit dispositif 100 ; 200 ; 300 ; 400, dite voie de compensation 103, distincte de la voie de mesure 102 comprenant l'interféromètre de mesure 140, de manière à prélever une autre partie du signal lumineux source $S_{1,\parallel}$ ; $S_{1,\parallel}$, $S'_{1,\perp}$ vers cette voie de compensation 103.

Dans tous les modes de réalisation représentés sur les figures 1 à 8, cette voie de compensation 103 est formée de préférence par une section de fibre optique à maintien de polarisation.

Dans le cas où le signal lumineux source $S_{1,\parallel}$ émis par la source lumineuse 110 est polarisé selon la première direction de polarisation grâce au polariseur linéaire 111 (cas des $1^{er}$, $2^{ème}$ et $3^{ème}$ modes de réalisation, cf. figures 1 à 4), la partie du signal lumineux source $S_{1,\parallel}$ prélevée vers la voie de compensation 103 par les moyens de couplage optique 120 ; 220 comprend une seule composante $S_{3,\parallel}$ rectiligne de même direction de polarisation que le signal lumineux source $S_{1,\parallel}$.

Dans le cas où le signal lumineux source $S_{i,\parallel}$, $S'_{1,\perp}$ émis par la source lumineuse 110 est non polarisé (cas des $4^{ème}$, $5^{ème}$, $6^{ème}$ et $7^{ème}$ modes de réalisation, cf. figures 5 à 8), la partie du signal lumineux source $S_{1,\parallel}$, $S_{1,\perp}$ prélevé vers la voie de compensation 103 par les moyens de couplage optique 320 ; 420 comprend deux composantes $S_{3,\parallel}$, $S'_{3,\perp}$ rectilignes dont les directions de polarisation sont respectivement alignées avec les directions de polarisation des composantes rectilignes $S_{1,\parallel}$, $S'_{1,\perp}$ du signal lumineux source, c'est-à-dire selon la première direction de polarisation et la deuxième direction de polarisation.

À partir de cette autre partie $S_{3,\parallel}$ ; $S_{3,\parallel}$, $S'_{3,\perp}$ du signal lumineux source $S_{1,\parallel}$ ; $S_{1,\parallel}$, $S'_{1,\perp}$ prélevée et transmise dans la voie de compensation 103, celle-ci produit un signal lumineux de compensation $S_{R,\perp}$ présentant une puissance lumineuse retour $P_{RET}$.

Ce signal lumineux de compensation $S_{R,\perp}$ est alors re-coupler sur la voie de mesure 102 grâce à des moyens de bouclage optique de la voie de compensation 103 dont on détaillera par la suite la structure pour les différents modes de réalisation de l'invention et leurs variantes.

De cette façon, le signal lumineux de compensation $S_{R,\perp}$ et le signal lumineux de sortie $S_{OUT,\parallel}$ circulent ensemble selon un même sens de propagation sur la voie de mesure 102, en direction des moyens de couplage optique 120 ; 220 ; 320 ; 420 du dispositif 100 ; 200 ; 300 ; 400.

Ces moyens de couplage optique 120 ; 220 ; 320 ; 420, connectés à une quatrième voie dudit dispositif 100 ; 200 ; 300 ; 400, appelée ici voie de détection 104 permettent alors de diriger ensemble le signal lumineux de sortie $S_{OUT,\parallel}$ et le signal lumineux de compensation $S_{R,\perp}$ vers des moyens de détection 150 placés à l'extrémité de la voie de détection 104 (voir figures 1 à 8).

Dans tous les modes de réalisation représentés sur les figures 1 à 8, cette voie de détection 104 est formée par une section de fibre optique à maintien de polarisation ou bien une fibre monomode ordinaire. Dans les deux cas, les puissances $P_{OUT}$ et $P_{RET}$ conservent des polarisations orthogonales.

De manière classique, ces moyens de détection délivrent un signal électrique 151 (cf. figure 1) qui est représentatif du résultat de la mesure du paramètre $\Omega_R$ physique auquel est sensible l'interféromètre de mesure 140.

Ce signal électrique est alors transmis à des moyens de traitement et de commande électrique 160 qui le traitent pour, d'une part, fournir la mesure du paramètre $\Omega_R$ physique, et, d'autre part, commander le modulateur 143 de phase en fonction de cette mesure (voir flèche entre les moyens de traitement et de commande électrique 160 et le modulateur 143 sur la figure 1).

Plus précisément, les moyens de traitement et de commande électrique 160 exploitent, par démodulation, le signal électrique 151 modulé délivré par les moyens de détection 150 afin de déterminer la composante $\Omega_R$ de la vitesse de rotation de l'interféromètre de mesure 140.

Sans précautions particulières, le signal électrique 151 délivré par les moyens de détection 150 est bruité, du fait non seulement du bruit photonique, mais surtout du bruit d'intensité en excès qui sont présents dans le signal lumineux de sortie $S_{OUT,\parallel}$ sortant de l'interféromètre de mesure 140, de sorte que la mesure du paramètre $\Omega_R$ physique à mesurer est peu précise.

Ainsi, c'est l'un des objectifs de l'invention que de proposer un dispositif de mesure interférométrique dans lequel l'effet du bruit relatif d'intensité RIN de la source lumineuse 110 sur la mesure du paramètre $\Omega_R$ physique à mesurer est réduit, sinon éliminé.

C'est un autre objectif de l'invention que de proposer un tel dispositif de mesure interférométrique qui soit facile à mettre en oeuvre.

À cet effet, selon l'invention, il est prévu que :

- la voie de compensation 103 comprenne des moyens de rotation de polarisation 131 ; 231 ; 331 ; 431 pour produire le signal lumineux de compensation $S_{R,\perp}$ selon la deuxième direction de polarisation croisée avec la première direction de polarisation, et des moyens de bouclage optique 132 ; 134 ; 234 ; 334 ; 434 de la voie de compensation 103 sur ladite voie de mesure 102, ces moyens de bouclage optique 132 ; 134 ; 234 ; 334 ; 434 recevant le signal lumineux de compensation $S_{R,\perp}$ circulant sur la voie de compensation 103 et redirigeant une partie au moins du signal lumineux de compensation $S_{R,\perp}$ vers la voie de mesure 102,
- les moyens de détection 150 comprennent un unique détecteur de rayonnement optique, par exemple ici une photodiode PIN à semi-conducteur, connecté aux moyens de couplage optique 120 ; 220 ; 320 ; 420 recevant le signal lumineux de sortie $S_{OUT,\parallel}$ et le signal lumineux de compensation $S_{R,\perp}$, qui circulent sur la voie de mesure 102, pour les acheminer vers ledit détecteur (150),
- le dispositif 100 ; 200 ; 300 ; 400 comporte en outre des moyens d'équilibrage de puissance 132 ; 121, 133 ; 222 ; 223 ; 233 ;321, 333 ; 321, 322 ; 422 corrigeant la puissance lumineuse de sortie $P_{OUT}$ et/ou ladite puissance lumineuse retour $P_{RET}$ acheminées vers le détecteur 150 de telle sorte que la puissance lumineuse retour $P_{RET}$ soit sensiblement égale à la puissance lumineuse de sortie $P_{OUT}$ au niveau de ce détecteur 150, et
- ladite voie de compensation 103 présente une longueur ajustée pour que le signal lumineux de sortie $S_{OUT,\parallel}$ présente au niveau du détecteur 150 un retard temporel $\tau$ par rapport au signal lumineux de compensation $S_{R,\perp}$ sensiblement égal à $1/(2 \cdot f_p)$.

Afin de mieux comprendre les avantages et le fonctionnement d'un tel dispositif de mesure interférométrique, on va maintenant décrire en détail le premier mode de réalisation du dispositif 100 de mesure interférométrique selon l'invention représenté sur la figure 1.

## PREMIER MODE DE RÉALISATION

Dans ce premier mode de réalisation, les moyens de couplage optique 120 (cf. pointillés sur la figure 1) comprennent un premier coupleur 121 deux par deux (encore noté « *2 x 2* ») à quatre ports 121A, 121B, 121C, 121D.

Ce premier coupleur est classiquement caractérisé par son coefficient de transmission, noté ici $T_1$, qui est compris entre 0 et 1 ($T_1 = 0$ correspondant à une transmission de 0% et 1 à une transmission de 100%), et son coefficient de couplage, noté ici $C_1$, qui est compris entre 0 et 1 ($C_1 = 0$ correspondant à un couplage de 0% et 1 à couplage de 100%).

De manière générale, ce type de coupleur présente de très faible pertes, de sorte que le coefficient de transmission $T_1$ et le coefficient de couplage $C_1$ sont simplement reliés par la relation $C_1 = 1-T_1$. Par exemple, un coupleur 2 x 2 de type 50/50 est un coupleur tel que $T_1 = 0,5$ (50% de transmission) et $C_1 = 1-0,5 = 0,5$ (50% de couplage).

Comme représenté sur la figure 1, le premier coupleur 121 est tel que :

- le premier port 121A, connecté à la voie source 101, reçoit le signal lumineux source $S_{1,\parallel}$ polarisé selon la première direction de polarisation (direction parallèle)
- le deuxième port 121B, connecté à la voie de mesure 102, transmet la partie $S_{2,\parallel}$ du signal lumineux source $S_{1,\parallel}$ sur la voie de mesure 102, avec un facteur de transmission égal à $T_1$.
- le troisième port 121C, connecté à la voie de compensation 103, couple l'autre partie $S_{3,\parallel}$ du signal lumineux source $S_{1,\parallel}$ sur la voie de compensation 103 avec un facteur de couplage égal à $C_1$, et
- le quatrième port 121D, connecté à la voie de détection 104 couple le signal lumineux de sortie et le signal lumineux de compensation $S_{R,\perp}$ sur la voie de détection 103, avec le même facteur de couplage égal à $C_1$.

L'autre partie $S_{3,\parallel}$ du signal lumineux source $S_{1,\parallel}$ couplée sur la voie de compensation 103 est, comme le signal lumineux source polarisé selon la première direction de polarisation. Grâce aux moyens de rotation de polarisation 131 disposés sur la voie de compensation 103, la direction de polarisation est tournée de 90° de manière à générer ledit signal lumineux de compensation $S_{R,\perp}$ qui est polarisé rectilignement selon la deuxième direction de polarisation croisée, à 90° de la première direction de polarisation.

De manière avantageuse, les moyens de rotation de polarisation comprennent la portion de fibre optique de la voie de compensation 103 qui est comprise entre le troisième port 121C du premier coupleur 121, portion de fibre optique à maintien de polarisation (« *polarization-maintaining fiber* » en anglais ou fibre PM) pouvant être tordue de 90° entre ses deux extrémités de manière à obtenir cette rotation de la polarisation.

Le signal lumineux de compensation $S_{R,\perp}$ se propage alors le long de la voie de compensation 103 en conservant sa polarisation jusqu'à atteindre les moyens de bouclage optique 132 de la voie de compensation 103 sur la voie de mesure 102.

Ces moyens de couplage comprennent dans ce premier mode de réalisation un deuxième coupleur 132 deux par deux à quatre ports, présentant un coefficient de transmission $T_2$ et un coefficient de couplage $C_2$, définies de la même manière que pour le premier coupleur 131.

Grâce à ce deuxième coupleur 132, le signal lumineux de compensation $S_{R,\perp}$ circulant sur la voie de compensation 103 est redirigé partiellement sur la voie de mesure 102, la proportion couplée dépendant du coefficient de couplage $C_2$ du deuxième coupleur 132.

De la même manière, le signal lumineux de sortie $S_{OUT,\parallel}$ provenant de l'interféromètre de mesure 140 et circulant sur la voie de mesure 102 est transmis par le deuxième coupleur 132 en fonction de son coefficient de transmission $T_2$.

Le « rebouclage » optique de la voie de compensation 103 sur la voie de mesure 102 est ici essentielle à la mise en oeuvre de l'invention.

Grâce à lui, il est possible d'utiliser des moyens de détection qui comportent un détecteur unique 150.

En effet, après passage au travers du deuxième coupleur 132, le signal lumineux de sortie $S_{OUT,\parallel}$ et le signal lumineux de compensation $S_{R,\perp}$ se propagent jusqu'au deuxième port 121B du premier coupleur 121 qui acheminent alors ces signaux, par couplage sur la voie de détection 104 avec un coefficient de couplage égal à $C_1$ jusque vers le détecteur 150.

Par ailleurs, dans le dispositif 100 selon l'invention, on ajuste la longueur de la voie de compensation 103 de sorte que le signal lumineux de sortie $S_{OUT,\parallel}$ présente, au niveau du détecteur 150, un retard temporel $\tau$ par rapport au signal lumineux de compensation $S_{R,\perp}$. Qui est, selon l'invention sensiblement égal à $1/(2*f_p)$, $f_p$ étant donc la fréquence propre de l'anneau 141 de Sagnac.

Ce retard temporel $\tau$ correspond à la différence des temps de propagation, entre la source lumineuse 110 et le détecteur 150, entre le signal lumineux passé par l'interféromètre de mesure 140 et le signal lumineux passé par la voie de compensation 103.

On va maintenant exprimer, à un instant t quelconque, la puissance lumineuse de sortie $P_{OUT}$ et la puissance lumineuse retour $P_{RET}$ arrivant sur le détecteur, en fonction de la puissance lumineuse source $P_S$.

On notera tout d'abord que cette puissance lumineuse source $P_S$ fluctue dans le temps à cause du bruit d'intensité en excès de la source lumineuse 110, de sorte que la puissance lumineuse source $P_S$ peut s'écrire sous la forme suivante : $P_S(t) = <P_S> * [1 + B(t)]$, où le terme $<P_S>$ représente la puissance lumineuse source moyenne et le terme $B(t)$ représente le bruit relatif d'intensité en excès de la source lumineuse 110, présentant une la densité spectrale de puissance ou « puissance de bruit » $B_{RIN}$ (voir introduction).

Pour le signal lumineux de compensation $S_{R,\perp}$, qui est issu du signal lumineux source $S_{1,\parallel}$ couplé dans la voie de compensation 103 par le premier coupleur 131, puis tourné de 90°, puis rebouclé sur la voie de mesure 102 parle deuxième coupleur 132 et enfin redirigé vers le détecteur 150 *via* le premier coupleur 131, on peut exprimer la puissance lumineuse retour $P_{RET}$ sous la forme :

$$P_{RET}(t) = \alpha_r * P_S(t) * C_1 * C_2 * C_1 = \alpha_r * <P_S> * [1+B(t)] * C_1^2 * C_2,$$

le coefficient $\alpha_r$ représentant un terme générique rendant compte des différentes pertes optiques intervenant sur le chemin optique du signal lumineux de compensation $S_{R,\perp}$.

De la même manière, pour le signal lumineux de sortie $S_{OUT,\parallel}$, qui est issu du signal lumineux source $S_{1,\parallel}$ couplé dans la voie de mesure 102 par le premier coupleur 131, puis passe dans l'interféromètre de mesure 140 pour ressortir sur la voie de mesure 102 et est enfin redirigé vers le détecteur 150 *via* le premier coupleur 131, on peut exprimer la puissance lumineuse de sortie $P_{OUT}$ sous la forme :

$$P_{OUT}(t) = \alpha_m * P_S(t-\tau) * T_1 * T_2^2 * C_1 = \alpha_m * <P_S> * [1+B(t-\tau)] * T_1 * T_2^2 * C_1,$$

le coefficient $\alpha_m$ représentant un terme générique rendant compte non seulement des différentes pertes optiques intervenant sur le chemin optique du signal lumineux de sortie $S_{OUT,\parallel}$, mais aussi, et surtout de la réponse de l'interféromètre de mesure 140, cette réponse pouvant varier en fonction de la profondeur de modulation en créneau de mise au biais.

Ainsi, comme le signal lumineux de sortie $S_{OUT,\parallel}$ et le signal lumineux de compensation sont respectivement polarisés selon la première et la deuxième direction de polarisation, qui sont des polarisations croisées, ces deux signaux s'ajoutent en puissance sans aucun effet d'interférence au niveau du détecteur 150, de sorte que la puissance lumineuse détectée $P_D(t)$ reçue par le détecteur 150 à l'instant t est égale à la somme $P_{RET}(t) + P_{OUT}(t)$ de la puissance lumineuse retour $P_{RET}(t)$ et de la puissance lumineuse de sortie $P_{OUT}(t)$, soit encore :

$$P_D(t) = P_{RET}(t) + P_{OUT}(t).$$

Cette puissance lumineuse détectée $P_D(t)$ peut s'écrire sous la forme :

$$P_D(t) = <P_D> * [1 + B_D(t)],$$

où le terme $<P_D>$ correspond à la puissance lumineuse moyenne détectée, exempte de bruit, et où le terme $B_D(t)$ correspond à la partie bruitée de la puissance lumineuse détectée $P_D(t)$, rendant notamment compte du bruit RIN.

Ainsi, pour réduire l'effet du bruit relatif d'intensité en excès (RIN) de la source lumineuse 110, on comprend que la partie bruitée $B_D(t)$ doit être le plus faible possible.

Reprenant les expressions mathématiques données ci-dessus pour la puissance lumineuse de sortie $P_{OUT}(T)$ et la puissance lumineuse retour $P_{RET}(t)$, la partie bruitée $B_D(t)$ peut s'exprimer sous la forme :

$$B_D(t) = \alpha_r * <P_S> * B(t) * C_1^2 * C_2 + \alpha_m * <P_S> * B(t-\tau) * T_1 * T_2^2 * C_1,\ \text{soit}$$

$$= <P_S> * C_1 * [\ \alpha_r * (1-T_1) * (1-T_2) * B(t) + \alpha_m * T_1 * T_2^2 * B(t-\tau)],\ \text{avec}\ C_1 = 1-T_1\ \text{et}\ C_2 = 1-T_2.$$

À ce stade, pour la compréhension, on considérera par exemple que les pertes optiques pour le signal lumineux de compensation sont négligeables, c'est-à-dire que le coefficient $\alpha_r$ peut être approximé à 1.

Dans ce cas, si l'on considère par exemple que le coefficient $\alpha_m$ est typiquement égale à 0,01, correspondant à -20 dB de pertes dans l'interféromètre de mesure 140 du fait des pertes de couplage du modulateur 141, de l'anneau 141 de Sagnac et de la profondeur de modulation du modulateur 141, alors on peut calculer que si $T_1 = 0,5$ (i.e. $C_1 = 1-T_1 = 0,5$ soit 50%) et $T_2 = 0,99$ (*i.e.* $C_2 = 1-T_2 = 0,01$, soit 1%) alors la puissance lumineuse de sortie $P_{OUT}$ et la puissance lumineuse retour $P_{RET}$ sont sensiblement égales au niveau du détecteur 150, de sorte que la partie bruitée $B_D(t)$ détectée est égale à :

$$B_D(t) \approx (1/400) * <P_S> * [B(t) + B(t-\tau)].$$

De manière générale, on comprend qu'il est possible d'égaliser la puissance lumineuse retour $P_{RET}$ avec la puissance lumineuse de sortie $P_{OUT}$ au niveau du détecteur 150 en ajustant convenablement les coefficients de transmission $T_1$, $T_2$, respectivement les coefficients de couplage $C_1$, $C_2$, du premier coupleur 131 et du deuxième coupleur 132 du dispositif 100.

En d'autres termes, le premier coupleur 131 et le deuxième coupleur 132 forment ici les moyens d'équilibrage de puissance corrigeant la puissance lumineuse de sortie $P_{OUT}$ et la puissance lumineuse retour $P_{RET}$ acheminées vers le détecteur 150.

Comme selon l'invention, la longueur de la voie de compensation 103 est ajustée pour que le retard temporel $\tau$ entre le signal lumineux de sortie $S_{OUT,\parallel}$ et le signal lumineux de compensation $S_{R,\perp}$ soit sensiblement égal à $1/(2*f_p)$, le spectre en fréquence de la puissance de bruit reçue par le détecteur 150 présente une valeur faible, voire nulle si les puissances lumineuses $P_{RET}$, $P_{OUT}$ sont parfaitement égalisées, pour toutes les fréquences qui sont des multiples impaires de $1/(2*\tau)$, c'est-à-dire des multiples impairs de la fréquence propre $f_p$ de l'interféromètre de mesure 140 (*i.e.* $f_p$, $3*f_p$, $5*f_p$, etc...).

En d'autres termes, en égalisant sensiblement la puissance lumineuse de sortie $P_{OUT}$ et la puissance lumineuse retour $P_{RET}$ et en ajustant le retard temporel entre le signal lumineux de sortie et le signal lumineux de compensation de polarisation croisée, il est possible de réduire, voire d'éliminer, l'effet du bruit d'intensité en excès de la source lumineuse 110 sur la mesure du paramètre $\Omega_R$ à mesurer, la démodulation du signal électrique 151 délivré par le détecteur 150 grâce aux moyens de traitement et de commande électrique 160 se faisant justement à la fréquence de modulation $f_m$ du modulateur de phase, qui est un multiple impair de la fréquence propre $f_p$ de l'interféromètre de mesure 140.

On va maintenant décrire les différents autres modes de réalisation d'un dispositif 100 ; 200 ; 300 ; 400 de l'invention représentés sur les figures 2 à 8 qui fonctionnent selon le même principe.

## DEUXIEME MODE DE REALISATION

Sur la figure 2, on a par exemple représenté un dispositif 100 qui diffère du premier mode de réalisation en ce que les moyens de bouclage optique comportent ici un séparateur de polarisation 134 placé à la jonction entre la voie de compensation 103 et la voie de mesure 102.

Ce séparateur de polarisation 134 fonctionne ici plutôt en combineur de polarisation vers la voie de mesure 102 : il transmet, d'une part, le signal lumineux de sortie $S_{OUT,\parallel}$, polarisé selon la première direction de polarisation et issu de l'interféromètre de mesure 140, et il redirige, d'autre part, le signal lumineux de compensation $S_{R,\perp}$, polarisé selon la deuxième direction de polarisation et provenant de la voie de compensation 103.

Ce séparateur de polarisation 134 peut par exemple être formé par un cube séparateur de polarisation bien connu de l'homme du métier.

Ce type de séparateur de polarisation 134 présentant généralement des coefficients de transmission et de couplage sensiblement identiques, on peut prévoir avantageusement d'utiliser un atténuateur optique 133 permettant d'abaisser la puissance lumineuse retour $P_{RET}$ du signal lumineux de compensation $S_{R,\perp}$.

De préférence, cet atténuateur optique 133 est placé sur la voie de compensation 103 entre les moyens de rotation de polarisation 131 et le séparateur de polarisation 134.

## TROISIEME MODE DE REALISATION

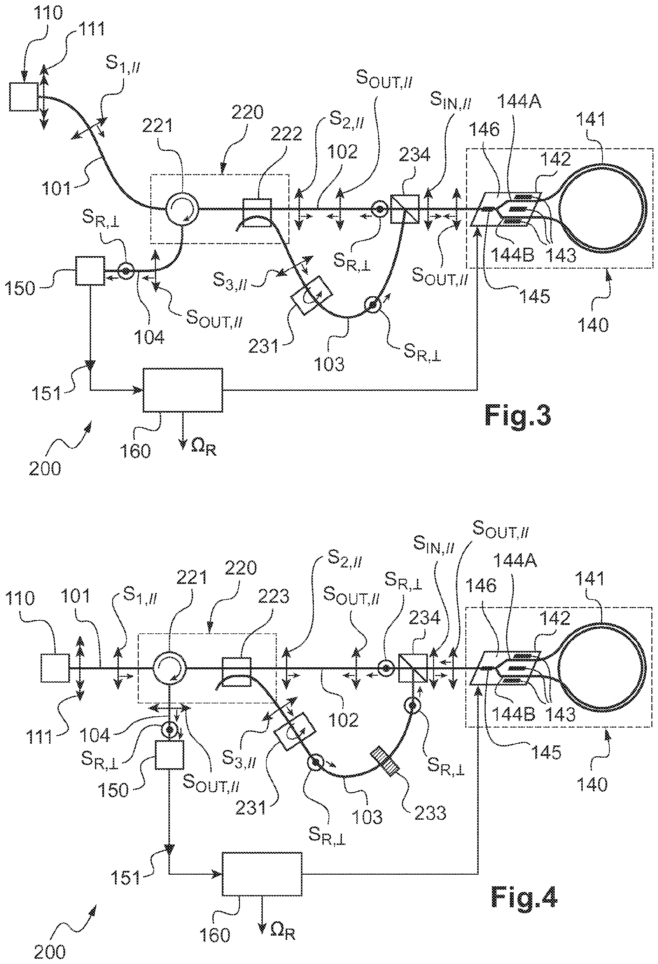

Dans un troisième mode de réalisation représenté sur la figure 3, les moyens de couplage optique 220 comprennent ici, en plus du premier coupleur 222, un circulateur optique 221 placé en amont de ce premier coupleur 222 qui présente trois ports connectés respectivement à la source lumineuse 110, à l'un des ports dudit premier coupleur 222 et au détecteur 150. Dans cette configuration, les moyens d'équilibrage de puissance comprennent alors le premier coupleur 222 grâce auquel, en ajustant le coefficient de transmission $T_1$ et le coefficient de couplage $C_1$, il est possible d'égaliser sensiblement la puissance lumineuse de sortie $P_{OUT}$ et la puissance lumineuse retour $P_{RET}$ au niveau du détecteur 150.

Par exemple, en reprenant les valeurs numériques de l'exemple du premier mode de réalisation pour $\alpha_r$ et $\alpha_m$, alors on un coefficient de transmission $T_1$ est égal à 0,99 pour le premier coupleur 222.

## VARIANTE DU TROISIEME MODE DE RÉALISATION

Dans une variante du troisième mode de réalisation représenté sur la figure 4, on peut prévoir d'utiliser un premier coupleur 223 présentant des coefficients de transmission $T_1$ et de couplage $C_1$ proches de 0,5. Dans ce cas, il est alors préférable d'ajouter un atténuateur optique 233 sur la voie de compensation 103 ou sur la voie de mesure 102 afin de corriger la puissance lumineuse retour $P_{RET}$ du signal lumineux de compensation.

## QUATRIEME, CINQUIEME, SIXIEME ET SEPTIEME MODE DE REALISATION

Dans les quatrième, cinquième, sixième et septième modes de réalisation représentés respectivement sur les figures 5 à 8, on a vu que la source lumineuse 110 du dispositif 300 ; 400 de mesure interférométrique était non polarisée et émettait un signal lumineux source pouvant se décomposer selon deux composantes $S_{1,\parallel}$, $S'_{1,\perp}$ orthogonales.

Afin que seuls le signal lumineux de sortie $S_{OUT,\parallel}$ polarisé selon la première direction de polarisation et le signal lumineux de compensation $S_{R,\perp}$ polarisé selon la deuxième direction de polarisation croisée atteignent le détecteur 150 du dispositif 300 ; 400, la voie de compensation 103 comprend un isolateur optique 332 ; 432 pour la deuxième direction de polarisation et les moyens de bouclage optique comprennent un séparateur de polarisation 334 ; 434.

Afin de bien comprendre les avantages d'une telle configuration lorsque la source lumineuse 110 n'est pas polarisée, on va décrire en détail le parcours des différents signaux lumineux dans le dispositif 300 de mesure interférométrique pour le quatrième mode de réalisation.

## QUATRIEME MODE DE REALISATION

Ainsi, comme représenté sur la figure 5, le premier coupleur 321 des moyens de couplage optique 320 du dispositif, d'une part, dirige ou transmet le signal lumineux source $S_{1,\parallel}$, $S'_{1,\perp}$ vers la voie de mesure 102 selon les deux composantes $S_{2,\parallel}$, $S'_{2,\perp}$ rectilignes, et, d'autre part, prélève ou couple ce même signal lumineux $S_{1,\parallel}$, $S'_{1,\perp}$ vers la voie de compensation 103 selon les deux composantes $S_{3,\parallel}$, $S'_{3,\perp}$ rectilignes.

Concernant les composantes $S_{2,\parallel}$ et $S_{3,\parallel}$, celle-ci circulent dans le dispositif 300 de la même manière que si la source lumineuse 110 était polarisée selon la première direction de polarisation. En particulier, ce sont ces deux composantes $S_{2,\parallel}$ et $S_{3,\parallel}$ qui donnent naissance respectivement au signal lumineux de sortie $S_{OUT,\parallel}$ et au signal lumineux de compensation. $S_{R,\perp}$.

Ainsi, pour ces deux composantes $S_{2,\parallel}$ et $S_{3,\parallel}$ tout se passe comme pour les trois premiers modes de réalisation. En particulier, l'isolateur optique 332 étant orienté dans le sens de propagation du signal lumineux de compensation $S_{R,\perp}$, il ne bloque pas celui-ci.

Pour les deux autres composantes $S'_{2,\perp}$ et $S'_{3,\perp}$, issues de la composante $S'_{1,\perp}$ du signal lumineux source polarisée selon la deuxième direction de polarisation, le comportement est différent.

D'un côté, la composante perpendiculaire $S'_{2,\perp}$ se propageant sur la voie de mesure 102 est tout d'abord couplée sur la voie de compensation 103 grâce au séparateur de polarisation 334 de sorte que cette composante perpendiculaire $S'_{2,\perp}$ se propage sur la voie de compensation 103 dans un sens opposé au signal lumineux de compensation $S_{R,\perp}$. Cette composante perpendiculaire $S'_{2,\perp}$ est alors bloquée par l'isolateur optique 332, si bien qu'elle ne peut pas être redirigée vers le détecteur grâce au premier coupleur 321.

D'un autre côté, la composante perpendiculaire $S'_{3,\perp}$ se propageant sur la voie de compensation 103 est tout d'abord tournée grâce aux moyens de rotation de polarisation 331 de manière à produire une composante parallèle $S'_{3,\parallel}$ se propageant sur la voie de compensation 103 dans le même sens que le signal lumineux de compensation $S_{R,\perp}$. N'étant pas bloquée par l'isolateur optique 332, cette composante parallèle $S'_{3,\parallel}$ arrive sur le séparateur de polarisation 334 qui ne la recouple pas sur la voie de mesure 102 puisque sa direction de polarisation est orientée selon la première direction de polarisation. Ainsi, cette composante parallèle $S'_{3,\parallel}$ ne peut parvenir jusqu'au détecteur 150.

En d'autres termes, on peut dire que :

- pour le signal lumineux source $S_{1,\parallel}$ de direction de polarisation parallèle, le dispositif 300 de mesure interférométrique fonctionne comme les dispositifs précédemment décrits (cf. figures 1 à 4), et
- pour le signal lumineux source $S'_{1,\perp}$ de direction de polarisation perpendiculaire, le dispositif 300 de mesure interférométrique fonctionne comme un filtre pour cette polarisation, de sorte qu'aucun signal lumineux issu de cette composante perpendiculaire $S'_{1,\perp}$ circulant dans le dispositif 300 n'atteint le détecteur 150.

Aussi, les explications données pour l'égalisation de la puissance lumineuse retour $P_{RET}$ avec la puissance lumineuse de sortie $P_{OUT}$ et pour le retard temporel $\tau$ entre le signal lumineux de sortie $S_{OUT,\parallel}$ et le signal lumineux de compensation $S_{R,\perp}$ restent valables dans le cas d'un dispositif 300 conçu pour une source lumineuse 110 non polarisée.

En particulier on notera que le dispositif 300 de la figure 4, qui comporte aussi un atténuateur optique 333, diffère seulement du dispositif de la figure 2 en ce qu'il comporte l'isolateur optique 332.

Ainsi, à la différence près des pertes introduites par l'isolateur optique 332 sur le signal lumineux de compensation $S_{R,\perp}$, les valeurs du coefficient de transmission $T_1$ et du coefficient de couplage $C_1$ du premier coupleur 321 sont identiques.

En variante, on pourrait remplacer le séparateur de polarisation par un autre coupleur deux par deux à quatre ports et introduire dans la voie de compensation un polariseur linéaire orienté de manière à bloquer la propagation de la composante parallèle $S'_{3,\parallel}$ jusque vers cet autre coupleur.

## CINQUIEME MODE DE REALISATION

Dans un cinquième mode de réalisation représenté sur la figure 6, les moyens de couplage optique 320 du dispositif 300 comprennent en outre un deuxième coupleur 322 deux par deux à quatre ports, ce deuxième coupleur 322 faisant partie des moyens d'équilibrage de puissance.

De manière avantageuse, le premier coupleur 321 peut être un coupleur optique du type à faible dépendance en polarisation, présentant pour chacune des polarisations croisées un coefficient de transmission de 50% et un coefficient de couplage proche de 50%. Dans ce cas, il est alors possible d'ajuster les puissances lumineuses retour $P_{RET}$ et de sortie $P_{OUT}$ grâce au deuxième coupleur 322.

## SIXIEME MODE DE REALISATION

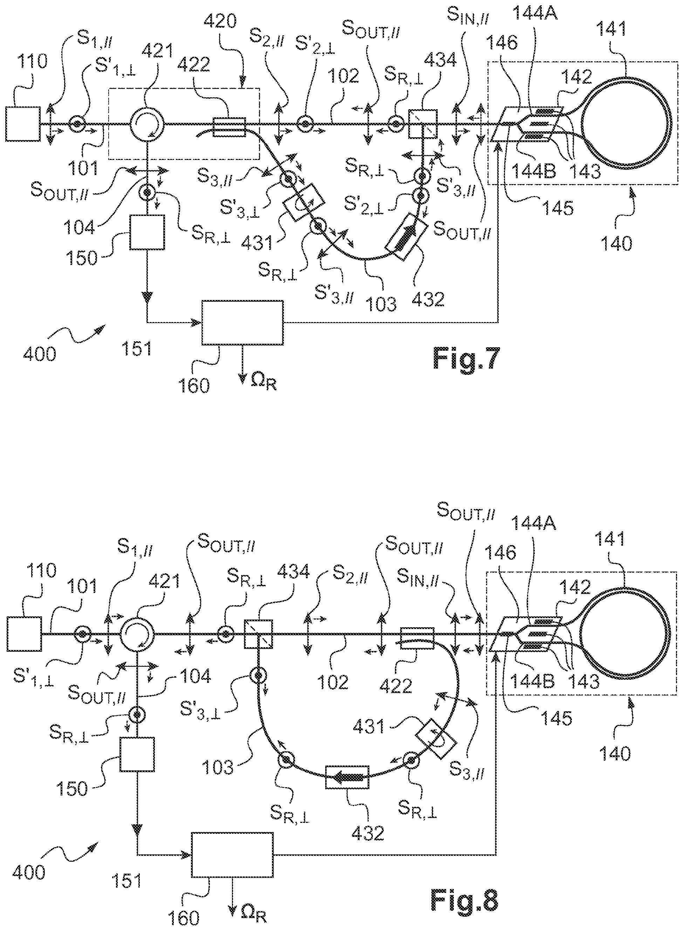

Dans un sixième mode de réalisation représenté sur la figure 7, au lieu d'utiliser deux coupleurs optiques 321, 322 comme dans le cinquième mode de réalisation (voir figure 6), on peut prévoir d'utiliser un premier coupleur 422 en combinaison avec un circulateur optique 421 placé en amont du premier coupleur 422, ce circulateur optique 421 présentant trois ports connectés respectivement à la source lumineuse 110, à l'un des ports du premier coupleur 422, et au détecteur (150).

Dans ce mode de réalisation, il est alors possible d'équilibrer les puissances lumineuses grâce à l'ajustement des coefficients de transmission et de couplage du premier coupleur 422.

## SEPTIEME MODE DE REALISATION

Dans un septième mode de réalisation représenté sur la figure 8, similaire au sixième mode de réalisation de la figure 7, le dispositif 400 est tel que le séparateur de polarisation 434 et le premier coupleur 422 ont été changés de position, le séparateur de polarisation 434 étant désormais placé entre le circulateur optique 421 et le premier coupleur 422. Malgré cette interversion, le dispositif 400 de ce septième mode de réalisation fonctionne comme le précédent.

Dans tous les modes de réalisation du dispositif 100 ; 200 ; 300 ; 400 de mesure interférométrique représentés sur les figures 1 à 8, on peut avantageusement faire fonctionner le dispositif 100 ; 200 ; 300 ; 400 en boucle fermée (voir par exemple H. Lefèvre, « The Fiber-Optic Gyroscope », Artech House, 1993 - Chapitre 8).

Dans ce cas, il sera alors possible de corriger la puissance lumineuse de sortie $P_{OUT}$ du signal lumineux de sortie $S_{OUT,\parallel}$ sortant de l'interféromètre de mesure 140 en modifiant la profondeur de modulation grâce au modulateur 143 de phase et aux moyens de traitement et de commande électrique 160 commandant ce modulateur 143.

Pour cela, on choisira une modulation en créneau de mise au biais qui ne dégrade pas le bruit photonique sur le détecteur 150, par exemple avec un déphasage de mise au biais (noté usuellement $\phi_b$) entre $\pm\,3\pi/4$ et $\pm\,7\pi/8$.

Ceci permet un réglage fin de l'équilibrage des puissances lumineuses de sortie $P_{OUT}$ et retour $P_{RET}$ par voie électronique, grâce au modulateur 143 et aux moyens de traitement et de commande électrique 160.

De manière générale, on peut combiner ces moyens d'équilibrage « électroniques » avec des moyens d'équilibrage « optiques », tels qu'un atténuateur ou un coupleur, qui permettent un premier réglage grossier de l'équilibrage des puissances.

De plus, lorsque les moyens d'équilibrage de puissance comprennent le modulateur et les moyens de traitement et de commande électrique, il est possible de compenser la dérive dans le temps de la puissance retour $P_{OUT}$ de l'interféromètre de mesure en modifiant la valeur du déphasage $\phi_b$ de la modulation en créneau $\pm\,\phi_b$ de mise au biais.

## Revendications

**1.** Dispositif (100 ; 200 ; 300 ; 400) de mesure interférométrique d'un paramètre ($\Omega_R$) à mesurer comportant :

- une source lumineuse (110) d'émission spontanée à spectre large émettant un signal lumineux source ($S_{1,\parallel}$, $S'_{1,\perp}$) et présentant du bruit relatif d'intensité (RIN) en excès,
- des moyens de détection (150) délivrant un signal électrique représentatif du résultat d'une mesure dudit paramètre ($\Omega_R$) à mesurer,
- des moyens de traitement et de commande électrique (160) traitant ledit signal électrique pour fournir ladite mesure dudit paramètre ($\Omega_R$) à mesurer, et
- des moyens de couplage optique (120 ; 220 ; 320 ; 420) :

  - recevant ledit signal lumineux source ($S_{1,\parallel}$, $S'_{1,\perp}$),
  - dirigeant une partie ($S_{2,\parallel}$, $S'_{2,\perp}$) au moins dudit signal lumineux source ($S_{1,\parallel}$, $S'_{1,\perp}$) vers une voie de mesure (102) comprenant un interféromètre de mesure (140) qui comporte un modulateur (143) de phase et un anneau de Sagnac (141), de fréquence propre $f_p$, sensible audit paramètre ($\Omega_R$) à mesurer, ledit interféromètre recevant, en entrée, un signal lumineux d'entrée ($S_{IN,\parallel}$) de puissance lumineuse d'entrée ($P_{in}$) et produisant, en sortie, un signal lumineux de sortie ($S_{OUT,\parallel}$) de puissance lumineuse de sortie ($P_{OUT}$) dépendant dudit paramètre ($\Omega_R$) physique à mesurer et proportionnelle à ladite puissance lumineuse d'entrée ($P_{in}$), ledit signal lumineux de sortie ($S_{OUT,\parallel}$) étant polarisé selon une première direction de polarisation et modulé à une fréquence de modulation $f_m$ grâce audit modulateur (143) de phase,

- prélevant une autre partie ($S_{3,\parallel}$, $S'_{3,\perp}$) dudit signal lumineux source ($S_{1,\parallel}$, $S'_{1,\perp}$) vers une voie de compensation (103) du bruit relatif d'intensité (RIN) en excès distincte de ladite voie de mesure (102), ladite voie de compensation (103) produisant un signal lumineux de compensation ($S_{R,\perp}$) du bruit relatif d'intensité (RIN) en excès présentant une puissance lumineuse retour ($P_{RET}$),
- dirigeant ledit signal lumineux de sortie ($S_{OUT,\parallel}$) et ledit signal lumineux de compensation ($S_{R,\perp}$) vers lesdits moyens de détection (150),

**caractérisé en ce que** :

- ladite voie de compensation (103) du bruit relatif d'intensité (RIN) en excès comprend :

- des moyens de rotation de polarisation (131) adaptés pour produire ledit signal lumineux de compensation ($S_{R,\perp}$) selon une deuxième direction de polarisation croisée avec ladite première direction de polarisation, et
- des moyens de bouclage optique (132 ; 134 ; 234 ; 334 ; 434) de ladite voie de compensation (103) sur ladite voie de mesure (102), lesdits moyens de bouclage optique (132 ; 134 ; 234 ; 334 ; 434) recevant ledit signal lumineux de compensation ($S_{R,\perp}$) circulant sur ladite voie de compensation (103) et redirigeant une partie au moins dudit signal lumineux de compensation ($S_{R,\perp}$) vers ladite voie de mesure (102),

- lesdits moyens de détection (150) comprennent un unique détecteur (150) de rayonnement optique connecté auxdits moyens de couplage optique (120 ; 220 ; 320 ; 420), lesdits moyens de couplage optique (120 ; 220 ; 320 ; 420) recevant ledit signal lumineux de sortie ($S_{OUT,\parallel}$) et ledit signal lumineux de compensation ($S_{R,\perp}$), qui circulent sur ladite voie de mesure (102), pour les acheminer vers ledit détecteur (150),
- ledit dispositif (100 ; 200 ; 300 ; 400) comporte en outre des moyens d'équilibrage de puissance (132 ; 121, 133 ; 222 ; 223 ; 233 ; 321, 333 ; 321, 322 ; 422) corrigeant ladite puissance lumineuse de sortie ($P_{OUT}$) et/ou ladite puissance lumineuse retour ($P_{RET}$) acheminées vers ledit détecteur (150) de telle sorte que ladite puissance lumineuse retour ($P_{RET}$) soit sensiblement égale à ladite puissance lumineuse de sortie ($P_{OUT}$) au niveau dudit détecteur (150), et
- ladite voie de compensation (103) présente une longueur ajustée pour que ledit signal lumineux de sortie ($S_{OUT,\parallel}$) présente au niveau du détecteur (150) un retard temporel $\tau$ par rapport audit signal lumineux de compensation ($S_{R,\perp}$) sensiblement égal à $1/(2 \cdot f_p)$.

2. Dispositif (100 ; 200) de mesure interférométrique selon la revendication 1, comportant en outre un polariseur linéaire (111) placé en aval de ladite source lumineuse (110) pour polariser ledit signal lumineux source ($S_{1,\parallel}$) selon ladite première direction de polarisation.

3. Dispositif (100 ; 200) de mesure interférométrique selon la revendication 2, dans lequel lesdits moyens de couplage optique (120 ; 220) comprennent un premier coupleur (121 ; 222 ; 223) deux par deux à quatre ports.

4. Dispositif (200) de mesure interférométrique selon la revendication 3, dans lequel lesdits moyens de couplage optique (220) comprennent un circulateur optique (221) placé en amont dudit premier coupleur (222 ; 223), ledit circulateur optique (221) présentant trois ports connectés respectivement à ladite source lumineuse (110), à l'un des ports dudit premier coupleur (222 ; 223), et audit détecteur (150).

5. Dispositif (100) de mesure interférométrique selon l'une des revendications 3 et 4, dans lequel lesdits moyens de bouclage optique comprennent un deuxième coupleur (132) deux par deux à quatre ports, lesdits moyens d'équilibrage de puissance comprenant également ledit deuxième coupleur (132).

6. Dispositif (100 ; 200) de mesure interférométrique selon l'une des revendications 3 et 4, dans lequel lesdits moyens de bouclage optique comprennent un séparateur de polarisation (134 ; 234).

7. Dispositif (100 ; 200) de mesure interférométrique selon l'une des revendications 5 et 6, dans lequel lesdits moyens d'équilibrage de puissance comprennent un atténuateur optique (133 ; 233) pour un signal lumineux polarisé ($S_{3,\perp}$) selon ladite deuxième direction de polarisation de manière à corriger ladite puissance lumineuse retour ($P_{RET}$).

8. Dispositif (300 ; 400) de mesure interférométrique selon la revendication 1, conçu pour une source lumineuse (110) émettant un signal lumineux source ($S_{1,\parallel}$, $S'_{1,\perp}$) non polarisé, dans lequel :

   - ladite voie de compensation (103) comprend un isolateur optique (332 ; 432) destiné à bloquer un signal lumineux polarisé ($S'_{2,\perp}$) selon la deuxième direction de polarisation se propageant sur ladite voie de compensation (103) en sens inverse dudit signal lumineux de compensation ($S_{R,\perp}$), et
   - lesdits moyens de bouclage optique comprennent un séparateur de polarisation (334 ; 434).

9. Dispositif (300 ; 400) de mesure interférométrique selon la revendication 8, dans lequel lesdits moyens de couplage optique (320 ; 420) comprennent un premier coupleur (321 ; 422) deux par deux à quatre ports.

10. Dispositif (400) de mesure interférométrique selon la revendication 9, dans lequel :

    - lesdits moyens de couplage optique (420) comprennent un circulateur optique (421) placé en amont dudit premier coupleur (321 ; 422), ledit circulateur optique (421) présentant trois ports connectés respectivement à ladite source lumineuse (110), à l'un des ports dudit premier coupleur (321 ; 422), et audit détecteur (150), et
    - lesdits moyens d'équilibrage de puissance comprennent ledit premier coupleur (321 ; 422).

11. Dispositif (300) de mesure interférométrique selon la revendication 9, dans lequel :

    - lesdits moyens de couplage optique (320) comprennent en outre un deuxième coupleur (322) deux par deux à quatre ports, et
    - lesdits moyens d'équilibrage de puissance comprennent ledit deuxième coupleur (322).

12. Dispositif (300) de mesure interférométrique selon l'une des revendications 8 à 11, dans lequel lesdits moyens d'équilibrage de puissance comprennent un atténuateur optique (333) pour un signal lumineux polarisé ($S_{3,\perp}$) selon ladite deuxième direction de polarisation de manière à corriger ladite puissance lumineuse retour ($P_{RET}$).

13. Dispositif (100) de mesure interférométrique selon l'une des revendications 1 à 12, dans lequel lesdits moyens d'équilibrage de puissance comprennent ledit modulateur (143) de phase et lesdits moyens de traitement et de commande électrique (160) commandant ledit modulateur (143) de phase pour corriger ladite puissance lumineuse de sortie ($P_{OUT}$).

14. Gyromètre comportant un dispositif de mesure interférométrique (100 ; 200 ; 300 ; 400) selon l'une des revendications 1 à 13, ledit paramètre physique ($\Omega_R$) à mesurer étant une composante de la vitesse de rotation dudit gyromètre autour de son axe de rotation.

15. Centrale d'attitude ou de navigation inertielle comportant au moins un gyromètre selon la revendication 14.

**Patentansprüche**

1. Vorrichtung (100; 200; 300; 400) zum interferometrischen Messen eines zu messenden Parameters ($\Omega_R$) mit

   - einer Lichtquelle (110) mit spontaner Emission eines breiten Spektrums, die ein Quellenlichtsignal ($S_{1,\parallel}$, $S'_{1,\perp}$) aussendet und ein Rauschen relativer Stärke (RIN) im Überfluß aufweist,
   - Erfassungsmitteln (150), die ein elektrisches Signal liefern, das dem Ergebnis einer Messung des zu messenden Parameters ($\Omega_R$) entspricht,
   - elektrischen Verarbeitungs- und Steuerungsmitteln (160), die das elektrische Signal verarbeiten, um die Messung des zu messenden Parameters ($\Omega_R$) zu liefern, und
   - optischen Kopplungsmitteln (120; 220; 320; 420),

     - die das Quellenlichtsignal ($S_{1,\parallel}$, - empfangen,
     - die wenigstens einen Teil ($S_{2,\parallel}$, $S'_{2,\perp}$) des Quellenlichtsignals ($S_{1,\parallel}$, $S'_{1,\perp}$) auf eine Meßstrecke (102) richten, die ein Meßinterferometer (140) aufweist, das einen Phasenmodulator (143) und einen für den zu messen-

den Parameter ($\Omega_R$) empfindlichen Sagnac-Ring (141) mit der Eigenfrequenz $f_p$ aufweist, wobei das Interferometer am Eingang ein Eingangslichtsignal ($S_{IN,\parallel}$) der Eingangslichtleistung ($P_{in}$) empfängt und am Ausgang ein Ausgangslichtsignal ($S_{OUT,\parallel}$) der vom zu messenden physikalischen Parameter ($\Omega_R$) abhängigen und zur Eingangslichtleistung ($P_{in}$) proportionalen Ausgangslichtleistung ($P_{OUT}$) erzeugt, wobei das Ausgangslichtsignal ($S_{OUT,\parallel}$) in einer ersten Polarisationsrichtung polarisiert und mittels des Phasenmodulators (143) mit einer Modulatyionsfrequenz $f_m$ moduliert ist,
- einen anderen Teil ($S_{3,\parallel}$, $S'_{3,\perp}$) des Quellenlichtsignals ($S_{1,\parallel}$, $S'_{1,\perp}$) entnehmen und auf eine von der Meßstrecke (102) verschiedene Strecke (103) für die Kompensation des Rauschens relativer Stärke (RIN) im Überfluß richten, wobei die Kompensationsstrecke (103) ein Lichtsignal ($S_{R,\perp}$) zum Kompensieren des Rauschens relativer Stärke (RIN) im Überfluß erzeugt, das eine Reflexionslichtleistung ($P_{RET}$) aufweist,
- die das Ausgangslichtsignal ($S_{OUT,\parallel}$) und das Kompensationslichtsignal ($S_{R,\perp}$) auf die Erfassungsmittel (150) richten,

**dadurch gekennzeichnet, daß**

- die Strecke (103) für die Kompensation des Rauschens relativer Stärke (RIN) im Überfluß

- Mittel (131) zum Drehen der Polarisationsrichtung, die dazu ausgelegt sind, das Kompensationslichtsignal ($S_{R,\perp}$) in eine zweite, mit der ersten Polarisationsrichtung gekreuzte Polarisationsrichtung zu drehen, und
- Mittel (132; 134; 232; 334; 434) zum Führen der Kompensationsstrecke (103) in einer optischen Schleife zur Meßstrecke (102), wobei die Mittel (132; 134; 232; 334; 434) zum Führen in einer optischen Schleife das sich auf der Kompensationsstrecke (103) ausbreitende Kompensationslichtsignal ($S_{R,\perp}$) empfangen und wenigstens einen Teil des Kompensationslichtsignals ($S_{R,\perp}$) zur Meßstrecke (102) umlenken,

aufweist,
- die Erfassungsmittel (150) einen einzigen Sensor (150) für optische Strahlung aufweisen, der mit den optischen Kopplungsmitteln (120; 220; 320; 420) verbunden ist, wobei die optischen Kopplungsmittel (120; 220; 320; 420) das Ausgangslichtsignal ($S_{OUT,\parallel}$) und das Kompensationslichtsignal ($S_{R,\perp}$), die sich auf der Meßstrecke (102) ausbreiten, empfangen, um sie zum Sensor (150) weiterzuleiten,
- die Vorrichtung (100; 200; 300; 400) außerdem Mittel (132; 121, 133; 222; 223; 233; 321, 322; 422) zum Leistungsausgleich aufweist, die die zum Sensor (150) weitergeleitete Ausgangslichtleistung ($P_{OUT}$) und/oder Reflexionslichtleistung ($P_{RET}$) derart korrigieren, daß die Reflexionslichtleistung ($P_{RET}$) am Sensor (150) im Wesentlichen gleich der Ausgangslichtleistung ($P_{OUT}$) ist, und
- die Kompensationsstrecke (103) eine derart abgestimmte Länge aufweist, daß das Ausgangslichtsignal ($S_{OUT,\parallel}$) gegenüber dem Kompensationslichtsignal ($S_{R,\perp}$) am Sensor (150) eine zeitliche Verzögerung $\tau$ von im Wesentlichen gleich $1/(2{*}f_p)$ aufweist.

2. Interferometrische Meßvorrichtung (100; 200) gemäß Anspruch 1, die außerdem einen linearen Polarisator (111) aufweist, der lichtstrahlabwärts der Lichtquelle (110) angeordnet ist, um das Quellenlichtsignal ($S_{1,\parallel}$) in der ersten Polarisationsrichtung zu polarisieren.

3. Interferometrische Meßvorrichtung (100; 200) gemäß Anspruch 2, bei der die optischen Kopplungsmittel (120; 220) einen ersten 2x2-Koppler (121; 222; 223) mit vier Anschlüssen aufweisen.

4. Interferometrische Meßvorrichtung (200) gemäß Anspruch 3, bei der die optischen Kopplungsmittel (220) einen optischen Zirkulator (221) aufweisen, der lichtstrahlaufwärts des ersten Kopplers (222; 223) angeordnet ist, wobei der optische Zirkulator (221) drei Anschlüsse aufweist, die entsprechend mit der Lichtquelle (110), einem der Anschlüsse des ersten Kopplers (222; 223) und dem Sensor (150) verbunden sind.

5. Interferometrische Meßvorrichtung (100) gemäß einem der Ansprüche 3 und 4, bei der die Mittel zum Führen in einer optischen Schleife einen zweiten 2x2-Koppler (121; 222; 223) mit vier Anschlüssen aufweisen, wobei die Mittel zum Leistungsausgleich ebenfalls den zweiten Koppler (132) aufweisen.

6. Interferometrische Meßvorrichtung (100; 200) gemäß einem der Ansprüche 3 und 4, bei der die Mittel zum Führen in einer optischen Schleife einen Polarisationsteiler (134; 234) aufweisen.

7. Interferometrische Meßvorrichtung (100; 200) gemäß einem der Ansprüche 5 und 6, bei der die Mittel zum Leistungsausgleich ein optisches Dämpfungselement (133; 233) für ein in der zweiten Polarisationsrichtung polarisiertes

Lichtsignal ($S_{3,\perp}$) aufweisen, um die Reflexionslichtleistung ($P_{RET}$) zu korrigieren.

8. Interferometrische Meßvorrichtung (300; 400) gemäß Anspruch 1, die für eine Lichtquelle (110) ausgelegt ist, die ein unpolarisiertes Quellenlichtsignal ($S_{1,\parallel}$, $S'_{1,\perp}$) aussendet und bei der

   - die Kompensationsstrecke (103) einen optischen Isolator (332; 432) aufweist, der dazu bestimmt ist, ein in der zweiten Polarisationsrichtung polarisiertes Lichtsignal ($S'_{2,\perp}$), das sich auf der Kompensationsstrecke (103) in zum Kompensationslichtsignal ($S_{R,\perp}$) entgegengesetzter Richtung ausbreitet, zu blockieren, und
   - die Mittel zum Führen in einer optischen Schleife einen Polarisationsteiler 334; 434) aufweisen.

9. Interferometrische Meßvorrichtung (300; 400) gemäß Anspruch 8, bei der die optischen Kopplungsmittel (320; 420) einen ersten 2x2-Koppler (321; 422) mit vier Anschlüssen aufweisen.

10. Interferometrische Meßvorrichtung (400) gemäß Anspruch 9, bei der

    - die optischen Kopplungsmittel (420) einen optischen Zirkulator (421) aufweisen, der lichtstrahlaufwärts des ersten Kopplers (321; 422) angeordnet ist, wobei der optische Zirkulator (421) drei Anschlüsse aufweist, die entsprechend mit der Lichtquelle (110), einem der Anschlüsse des ersten Kopplers (321; 422) und dem Sensor (150) verbunden sind, und
    - die Mittel zum Leistungsausgleich den ersten Koppler (321; 422) aufweisen.

11. Interferometrische Meßvorrichtung (300) gemäß Anspruch 9, bei der

    - die optischen Kopplungsmittel (320) außerdem einen zweiten 2x2-Koppler (322) mit vier Anschlüssen aufweisen und
    - die Mittel zum Leistungsausgleich den zweiten Koppler (322) aufweisen.

12. Interferometrische Meßvorrichtung (300) gemäß einem der Ansprüche 8 bis 11, bei der die der die Mittel zum Leistungsausgleich ein optisches Dämpfungselement (333) für ein in der zweiten Polarisationsrichtung polarisiertes Lichtsignal ($S_{3,\perp}$) aufweisen, um die Reflexionslichtleistung ($P_{RET}$) zu korrigieren.

13. Interferometrische Meßvorrichtung (100) gemäß einem der Ansprüche 1 bis 12, bei der die Mittel zum Leistungsausgleich den Phasenmodulator (143) und die den Phasenmodulator (143) steuernden elektrischen Verarbeitungs- und Steuerungsmittel (160) aufweisen, um die Ausgangslichtleistung ($P_{OUT}$) zu korrigieren.

14. Kreisel mit einer interferometrischen Meßvorrichtung (100; 200; 300; 400) gemäß einem der Ansprüche 1 bis 13, wobei der zu messende Parameter ($\Omega_R$) eine Komponente der Drehgeschwindigkeit des Kreisels um seine Drehachse ist.

15. Lage- und Trägheitsnavigationszentrale mit wenigstens einem Kreisel gemäß Anspruch 14.

**Claims**

1. A device (100; 200; 300; 400) for interferometric measurement of a parameter ($\Omega_R$) to be measured, including:

   - a wide-spectrum spontaneous-emission light source (110) emitting a source light signal ($S_{1,\parallel}$, $S'_{1,\perp}$) and having an excess relative intensity noise (RIN),
   - detection means (150) delivering an electric signal representative of the result of a measurement of said parameter ($\Omega_R$) to be measured,
   - electric processing and control means (160) processing said electric signal to provide said measurement of said parameter ($\Omega_R$) to be measured, and
   - optical coupling means (120; 220; 320; 420):

     - receiving said source light signal ($S_{1,\parallel}$, $S'_{1,\perp}$),
     - directing a part ($S_{2,\parallel}$, $S'_{2,\perp}$) at least of said source light signal ($S_{1,\parallel}$, $S'_{1,\perp}$) towards a measurement pathway (102) comprising a measurement interferometer (140) that includes a phase modulator (142) and a Sagnac ring (141), of proper frequency $f_p$, sensitive to said parameter ($\Omega_R$) to be measured, said interferometer receiving, as an input, an input light signal ($S_{IN,\parallel}$) of input light power ($P_{in}$) and producing, as an output, an output light signal ($S_{OUT,\parallel}$) of output light power ($P_{OUT}$) depending on said physical parameter ($\Omega_R$) to be measured and proportional to said input light power ($P_{in}$), said output light signal ($S_{OUT,\parallel}$) being polarized in a first polarization direction and modulated at a modulation frequency $f_m$ thanks to said phase modulator (142),
- tapping off another part ($S_{3,\parallel}$, $S'_{3,\perp}$) of said source light signal ($S_{1,\parallel}$, $S'_{1,\perp}$) towards an excess relative intensity noise (RIN) compensation pathway (103) distinct from the said measurement pathway (102), said compensation pathway (103) producing an excess relative intensity noise (RIN) compensation light signal ($S_{R,\perp}$) having a return light power ($P_{RET}$),
- directing said output light signal ($S_{OUT,\parallel}$) and said compensation light signal ($S_{R,\perp}$) towards said detection means (150),

**characterized in that**:

- said compensation pathway (103) of excess relative intensity noise (RIN) comprises:

- polarization rotation means (131) adapted to produce said compensation light signal ($S_{R,\perp}$) in a second polarization direction crossed with said first polarization direction, and
- means (132; 134; 234; 334; 434) for optically looping said compensation pathway (103) on said measurement pathway (102), said optical looping means (132; 134; 234; 334; 434) receiving said compensation light signal ($S_{R,\perp}$) circulating on said compensation pathway (103) and redirecting a part at least of said compensation light signal ($S_{R,\perp}$) towards said measurement pathway (102),

- said detection means (150) comprise a single optical radiation detector (150) connected to said optical coupling means (120; 220; 320; 420), said optical coupling means (120; 220; 320; 420) receiving said output light signal ($S_{OUT,\parallel}$) and said compensation light signal ($S_{R,\perp}$), which circulate on said measurement pathway (102), for routing them towards said detector (150),
- said device (100; 200; 300; 400) further includes power balance means (132; 121, 133; 222; 223; 233; 321, 333; 321, 322; 422) correcting said output light power ($P_{OUT}$) and/or said return light power ($P_{RET}$) routed towards said detector (150) in such a manner that said return light power ($P_{RET}$) is substantially equal to said output light power ($P_{OUT}$) at the level of said detector (150), and
- said compensation pathway (103) has a length adjusted so that said output light signal ($S_{OUT,\parallel}$) has at the level of the detector (150) a time delay $\tau$ with respect to said compensation light signal ($S_{R,\perp}$) substantially equal to $1/(2*f_p)$.

2. The interferometric measurement device (100; 200) according to claim 1, further including a linear polarizer (111) placed downstream of said light source (110) to polarize said source light signal ($S_{1,\parallel}$) in said first polarization direction.

3. The interferometric measurement device (100; 200) according to claim 2, wherein said optical coupling means (120; 220) comprise a first four-port two-by-two coupler (121; 222; 233).

4. The interferometric measurement device (200) according to claim 3, wherein said optical coupling means (220) comprise an optical circulator (221) placed upstream of said first coupler (222, 223), said optical circulator (221) having three ports connected to said light source (110), to one of the ports of said first coupler (222; 223) and to said detector (150), respectively.

5. The interferometric measurement device (100) according to one of claims 3 and 4, wherein said optical looping means comprise a second four-port two-by-two coupler (132), said power balance means also comprising said second coupler (132).

6. The interferometric measurement device (100; 200) according to one of claims 3 and 4, wherein said optical looping means comprise a polarization separator (134; 234).

7. The interferometric measurement device (100; 200) according to one of claims 5 and 6, wherein said power balance means comprise an optical attenuator (133; 233) for a light signal ($S_{3,\perp}$) polarized in said second polarization direction so as to correct said return light power ($P_{RET}$).

8. The interferometric measurement device (300; 400) according to claim 1, designed for a light source (110) emitting a non-polarized source light signal ($S_{1,\parallel}$, $S'_{1,\perp}$), wherein:

- said compensation pathway (103) comprises an optical isolator (332, 432) intended to block a light signal ($S'_{2,\perp}$) polarized in the second polarization direction propagating on said compensation pathway (103) in a reverse direction with respect to said compensation light signal ($S_{R,\perp}$), and
- said optical looping means comprise a polarization separator (334; 434).

9. The interferometric measurement device (300; 400) according to claim 8, wherein said optical coupling means (320; 420) comprise a first four-port two-by-two coupler (321; 422).

10. The interferometric measurement device (300; 400) according to claim 9, wherein:

- said optical coupling means (420) comprise an optical circulator (421) placed upstream of said first coupler (321; 422), said optical circulator (421) having three ports connected to said light source (110), to one of the ports of said first coupler (321; 422) and to said detector (150), respectively, and
- said power balance means comprise said first coupler (321 ; 422).

11. The interferometric measurement device (300; 400) according to claim 9, wherein:

- said optical coupling means (320) further comprise a second four-port two-by-two coupler (322), and
- said power balance means comprise said second coupler (322).

12. The interferometric measurement device (300) according to one of claims 8 to 11, wherein said power balance means comprise an optical attenuator (333) for a light signal ($S_{3,\perp}$) polarized in said second polarization direction so as to correct said return light power ($P_{RET}$).

13. The interferometric measurement device (100) according to one of claims 1 to 12, wherein said power balance means comprise said phase modulator (143) and said electric processing and control means (160) controlling said phase modulator (143) to correct the output light power ($P_{OUT}$).

14. A gyrometer including an interferometric measurement device (100; 200; 300; 400) according to any one of claims 1 to 13, said physical parameter ($\Omega_R$) to be measured being a component of the speed of rotation of said gyrometer about its axis of rotation.

15. An inertial attitude and navigation unit including at least one gyrometer according to claim 14.

EP 3 111 167 B1

Fig.1

Fig.2

21

Fig.3

Fig.4

22

Fig.5

Fig.6

EP 3 111 167 B1

Fig.7

Fig.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2251641 A1

- US 5331404 A

**Littérature non-brevet citée dans la description**

- **H. LEFÈVRE.** The Fiber-Optic Gyroscope. Artech House, 1993